# FASCICULE DE BREVET EUROPEEN

(11) **EP 3 793 815 B1**
(45) Date de publication et mention de la délivrance du brevet: **03.05.2023**
(21) Numéro de dépôt: 19742427.8
(22) Date de dépôt: 13.05.2019
(51) Int. Cl.: B29D 30/48

(54) **INSTALLATION ET PROCÉDÉ DE TRIAGE DE TRINGLES POUR PNEUMATIQUES, AVEC CONTROLE D'AZIMUT**
ANLAGE UND VERFAHREN ZUM SORTIEREN VON WULTSKERNEN FÜR REIFEN MIT KONTROLLE DES AZIMUTS
PLANT AND PROCESS FOR SORTING BEAD CORES FOR TIRES WITH CONTROL OF THE AZIMUTH

(30) Priorité: 14.05.2018 FR 1854008
(43) Date de publication de la demande: 24.03.2021
(73) Titulaire: COMPAGNIE GENERALE DES ETABLISSEMENTS MICHELIN, 63000 Clermont-Ferrand (FR)
(72) Inventeur: BERLIOUX, Loïc, 63040 CLERMONT-FERRAND CEDEX 9 (FR); FAURE, Yann, 63040 CLERMONT-FERRAND CEDEX 9 (FR)
(74) Mandataire: Redouté, Gilles Pierre
(86) Numéro de dépôt international: PCT/FR2019/051073
(87) Numéro de publication internationale: WO 2019/220046

(56) Documents cités:
- EP-A1- 2 537 667
- EP-A2- 0 834 393
- WO-A1-2011/030764
- JP-A- S51 124 178
- KR-B1- 101 765 795
- US-A- 3 945 577
- US-A- 5 141 033

## Description

La présente invention concerne le domaine de la fabrication des tringles de renfort qui sont destinées à renforcer des bandages, notamment des bandages pneumatiques, afin d'assurer la tenue de tels bandages sur une jante.

De façon connue en soi, une tringle se présente sous la forme d'un élément annulaire en matériau rigide, généralement métallique, qui peut être constitué d'un brin monolithique ou, de préférence, d'une tresse comprenant plusieurs brins entrelacés.

Il est en particulier connu, par exemple voir US 5,141,033, de fabriquer une tringle en réalisant tout d'abord une âme annulaire, qui est obtenue en recourbant sur lui-même un premier fil, de préférence métallique, dont on fixe les extrémités l'une à l'autre au niveau d'une jonction dite « jonction d'âme », puis en enroulant en hélice autour de ladite âme au moins un fil, de préférence métallique, dit « fil de tresse ».

Afin de garantir la tenue du fil de tresse sur l'âme, il est nécessaire, une fois l'opération de tressage achevée, c'est-à-dire une fois que ledit fil métallique de tresse a été enroulé en hélice autour de l'âme, de fixer les deux extrémités libres dudit fil de tresse l'une à l'autre, en réalisant une jonction dite « jonction de tresse », par exemple au moyen d'un manchon que l'on sertit conjointement sur lesdites deux extrémités du fil de tresse.

Les inventeurs ont toutefois découvert qu'un tel procédé de fabrication pouvait, dans certaines circonstances, et notamment si l'on disposait de manière aléatoire les âmes sur le poste de tressage, conduire à la réalisation de tringles présentant certaines irrégularités de forme, certains balourds, voire potentiellement des zones de faiblesse, en raison d'une trop grande proximité entre la jonction de tresse et la jonction d'âme.

Les objets assignés à l'invention visent par conséquent à remédier aux inconvénients susmentionnés et à proposer une installation de préparation de tringles qui garantisse, de manière reproductible et fiable, une production de tringles de qualité.

Les objets assignés à l'invention sont atteints au moyen d'une installation de préparation de tringles destinées au renfort d'un bandage, tel qu'un bandage pneumatique, ladite installation comprenant :
- un poste d'amenée, agencé pour amener une âme qui forme un anneau ayant un axe principal Z3, ladite âme étant à cet effet maintenue fermée sur elle-même au niveau d'une jonction dite « jonction d'âme» qui occupe, en azimut autour dudit axe principal Z3, un premier secteur angulaire,
- un poste de tressage, agencé pour entrelacer au moins un fil, dit « fil de tresse », en hélice autour de l'âme, sur au moins un tour autour de l'axe principal Z3, en prévoyant, en azimut autour de l'axe principal Z3, un second secteur angulaire qui est destiné à accueillir une jonction, dite « jonction de tresse », entre un premier tronçon d'extrémité du fil de tresse et un second tronçon d'extrémité du fil de tresse afin de maintenir ledit fil de tresse fermé sur lui-même autour dudit axe principal Z3,
ladite installation étant caractérisée en ce qu'elle comporte un système de contrôle en azimut qui comprend :
- un dispositif de détection agencé pour détecter sur l'âme un élément de repérage par rapport auquel la position du premier secteur angulaire est connue,
- et un dispositif de positionnement qui permet d'adapter l'orientation en azimut de ladite âme, par référence audit élément de repérage, pour la mise en oeuvre de ladite âme sur le poste de tressage, de telle manière que le second secteur angulaire prévu par le poste de tressage pour la jonction de tresse ne chevauche pas le premier secteur angulaire occupé par la jonction d'âme.

Avantageusement, en contrôlant les positions en azimut respectives de la jonction d'âme et de la jonction de tresse, on peut répartir ces jonctions en des positions angulaires distinctes et choisies autour de l'axe principal Z3, et ainsi, en particulier, éviter de superposer ces jonctions dans un même secteur angulaire.

De la sorte, on évite de concentrer les jonctions, et donc de créer des zones de faiblesse, des irrégularités importantes de surface ou de section droite de l'âme, ou encore des balourds significatifs.

D'autres objets, caractéristiques et avantages de l'invention apparaîtront plus en détail à la lecture de la description qui suit, ainsi qu'à l'aide des dessins annexés, fournis à titre purement illustratif et non limitatif, parmi lesquels :
La figure 1 illustre, selon une vue en perspective, une vue d'ensemble d'une installation selon l'invention.
La figure 2 illustre, selon une vue en perspective, un sous-ensemble de l'installation de la figure 1 comprenant un poste d'amenée et un système de contrôle en azimut.
La figure 3 illustre, selon une vue de détail en perspective, une portion du sous-ensemble de la figure 2, au sein duquel une âme est engagée dans un mécanisme de guidage et d'entraînement du système de contrôle en azimut.
La figure 4 illustre, selon une vue de côté, le détail de l'acheminement de plusieurs âmes successives par le dispositif d'amenée, ce dernier étant pourvu d'un dispositif de triage qui comprend d'une part un organe de centrage pourvu de rampes de guidage et d'autre part un convoyeur à vis sans fin agencé pour amener et lâcher des âmes une par une à l'aplomb dudit organe de centrage.
La figure 5 illustre, selon une vue de face, le principe de détection et de positionnement en azimut d'une âme engagée dans le système de contrôle en azimut.
La figure 6 illustre, selon une vue de face, un exemple de répartition angulaire de la jonction d'âme et de la jonction de tresse l'une par rapport à l'autre au sein d'une tringle, conformément au principe mis en oeuvre par l'invention.
La figure 7 illustre, selon une vue de côté avec arrachement de matière, un exemple de détection de la jonction d'âme, ici un bourrelet de soudure, par un palpeur mécanique à galet basculant couplé à un levier qui agit sur un capteur, ici un capteur inductif de type solénoïde.

La présente invention concerne une installation 1 de préparation de tringles 2 qui sont destinées au renfort d'un bandage, tel qu'un bandage pneumatique.

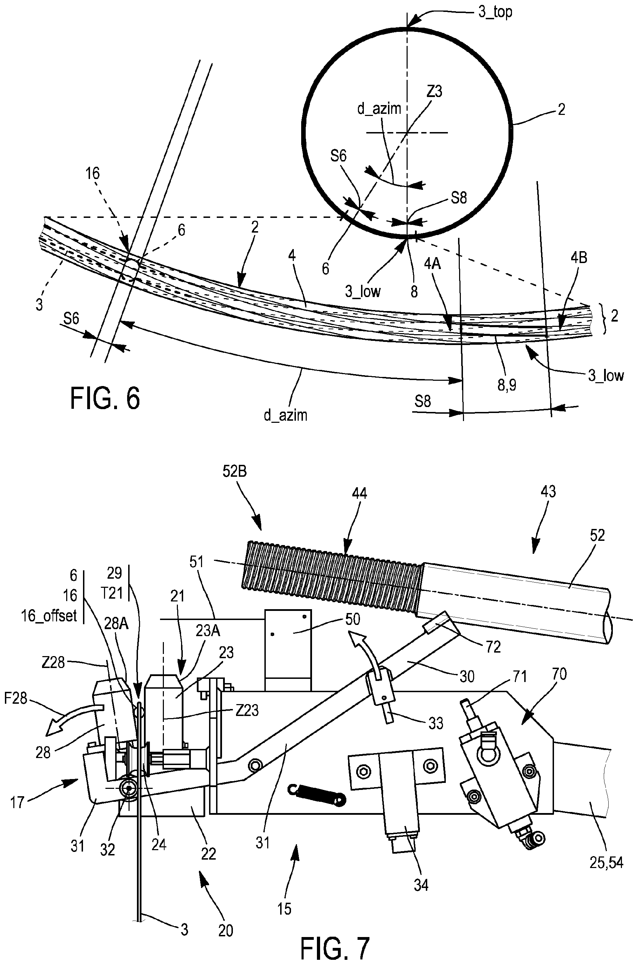

De façon connue en soi, tel que cela est visible sur la figure 6, une tringle 2 comprend une âme 3, ici représentée en pointillés sur la figure 6, autour de laquelle est enroulé au moins un fil de tresse 4.

L'âme 3 elle-même peut-être monobrin, c'est-à-dire formée d'un seul fil d'âme monolithique, ou, en variante, multibrins, c'est-à-dire formée d'une pluralité de fils d'âme entrelacés.

L'âme 3, ou les fils d'âme, pourront être formés dans tout matériau approprié, suffisamment rigide et possédant une résistance à la rupture en traction supérieure à un seuil prédéterminé.

De préférence, l'âme 3, ou les fils d'âme, seront métalliques, par exemple en acier.

En variante, on pourrait toutefois utiliser un autre matériau, par exemple un polymère adéquat, ou un mélange de polymères adéquat, sans sortir du cadre de l'invention.

De préférence, quel que soit le matériau utilisé pour former le ou les fils d'âme, ledit matériau pourra être magnétisable, de sorte notamment à pouvoir recevoir un marquage magnétique 16_magn, tel que cela sera détaillé plus bas, par simple application locale d'un champ magnétique adapté.

De même, les fils de tresse 4 pourront être formés dans tout matériau approprié, suffisamment rigide et possédant une résistance à la rupture en traction supérieure à un seuil prédéterminé.

De préférence, le ou les fils de tresse 4 seront métalliques, par exemple en acier.

En variante, on pourrait toutefois utiliser un autre matériau, par exemple un polymère adéquat, ou un mélange de polymères adéquat, sans sortir du cadre de l'invention.

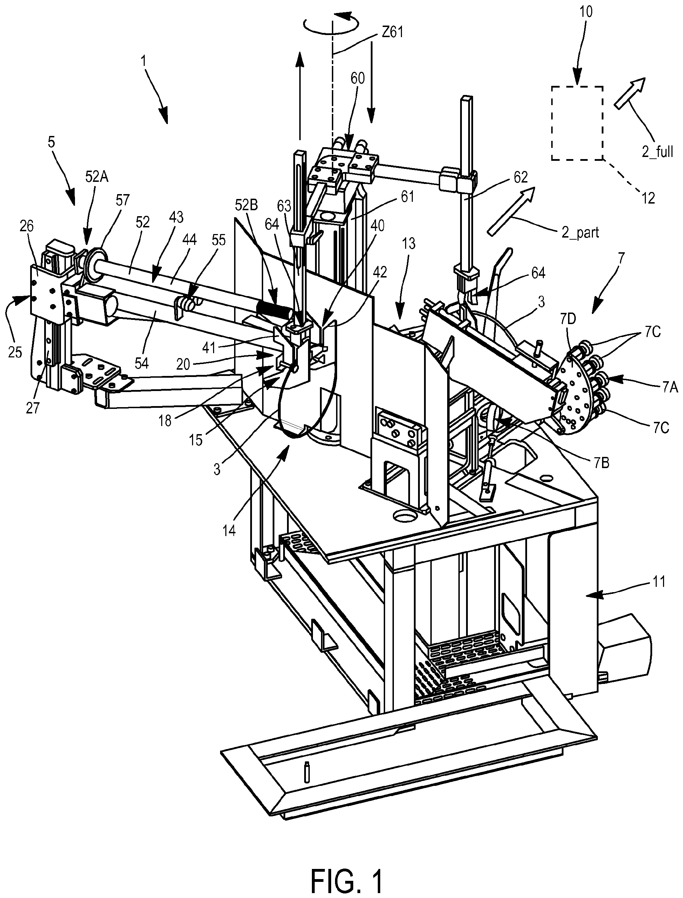

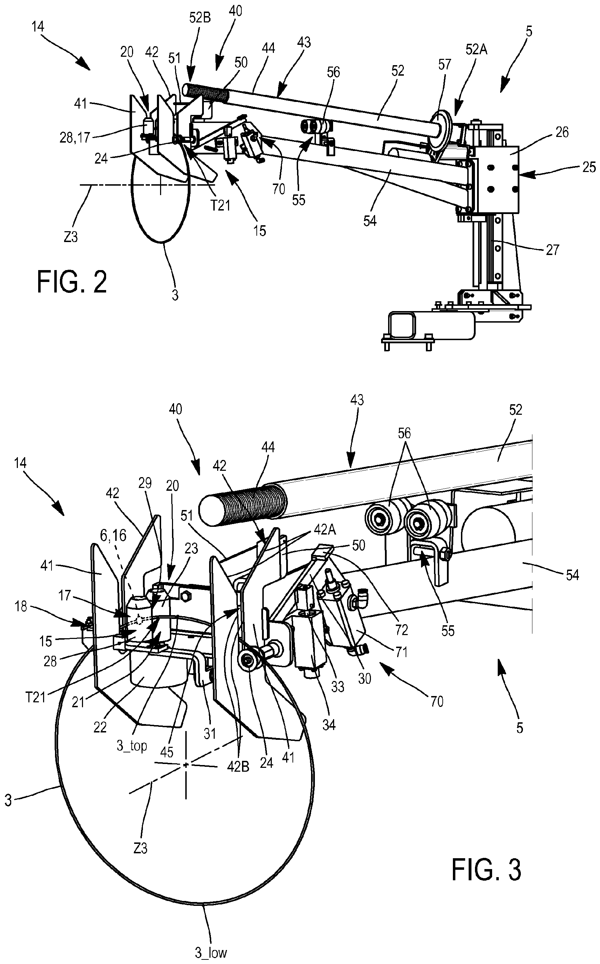

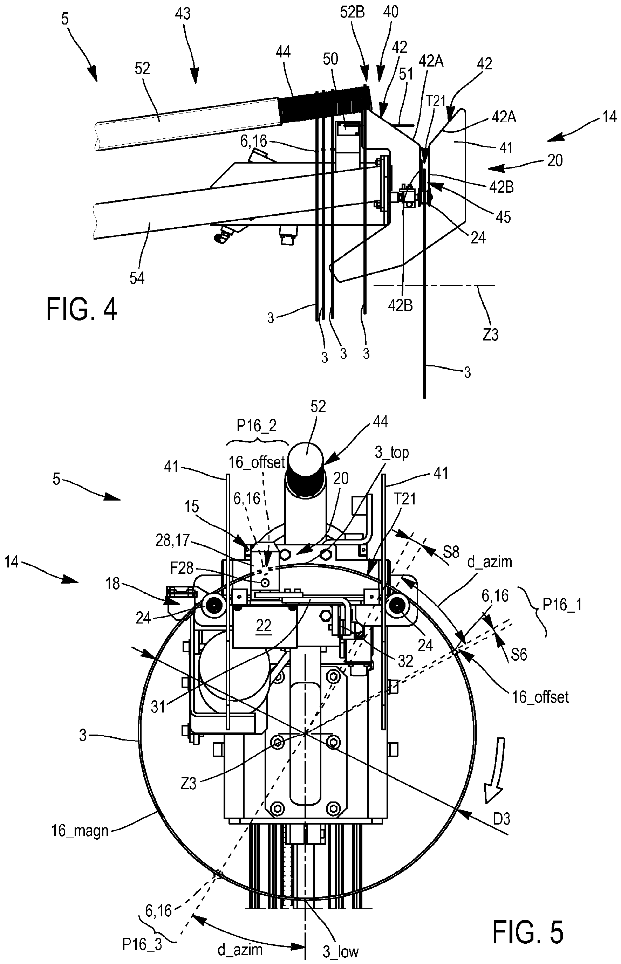

Tel que cela est illustré sur les figures 1 et 2, l'installation 1 comprend un poste d'amenée 5, agencé pour amener une âme 3 qui forme un anneau ayant un axe principal Z3, ladite âme 3 étant à cet effet maintenue fermée sur elle-même au niveau d'une jonction dite «jonction d'âme » 6 qui occupe, en azimut autour dudit axe principal Z3, un premier secteur angulaire S6, tel que cela est visible sur les figures 5 et 6.

L'axe principal Z3 correspond, par convention, à l'axe qui est normal à la surface annulaire délimitée par l'âme 3, et qui passe par le centre de gravité de ladite surface. Ainsi, lorsque l'âme 3 forme un anneau circulaire, ce qui est de préférence le cas, l'axe principal Z3 correspond à l'axe central dudit anneau circulaire.

De préférence, telle que cela est illustré notamment sur la figure 5, la jonction d'âme 6 pourra être formée par une soudure, et plus spécifiquement par un bourrelet de soudure, et ce en particulier lorsque l'âme 3 est monobrin.

En variante, la jonction d'âme 6 pourrait être formée par un manchon d'âme, en particulier lorsque l'âme 3 est multibrins.

Bien entendu tout type de jonction d'âme 6, par exemple par fil de ligature, pourra être employé sans sortir du cadre de l'invention.

A titre purement indicatif, l'étendue angulaire du premier secteur angulaire S6 pourra être sensiblement comprise entre 1 degré et 20 degrés en azimut autour de l'axe principal Z3, et plus particulièrement entre 1 degré et 10 degrés en azimut autour de l'axe principal Z3.

Plus particulièrement, dans le cas d'une jonction d'âme 6 réalisée par soudure, on préfère que la longueur d'arc occupée par le bourrelet de soudure ne dépasse pas 5 mm, ce qui peut correspondre, en proportion, à un premier secteur angulaire S6 sensiblement compris entre 1 degré et 3 degrés, pour des diamètres d'âme 3 qui sont destinées à intégrer des pneumatiques de dimensions nominales comprises entre 24 pouces et 13 pouces, et qui pourront ainsi présenter, à titre indicatif, un diamètre D3 hors tout sensiblement compris entre 645 mm (pour des pneumatiques de 24 pouces) et 342 mm (pour des pneumatiques de 13 pouces).

Dans le cas d'une jonction d'âme 6 réalisée par un manchon d'âme, la longueur d'arc occupée par ledit manchon d'âme n'excédera de préférence pas 40 mm, et plus particulièrement, de préférence, n'excédera pas 18 mm à 22 mm.

En pratique, cela pourra correspondre à un premier secteur angulaire S6 égal ou inférieur à 15 degrés, de préférence inférieur à 10 degrés, et plus particulièrement d'environ 5 degrés à 8 degrés, notamment si l'on considère ces mêmes gammes de diamètres d'âme 3 destinées à intégrer des pneumatiques de dimensions comprises entre 24 pouces et 13 pouces.

L'installation 1 comprend ensuite également, tel que cela est visible sur la figure 1, un poste de tressage 7, qui est agencé pour entrelacer au moins un fil, dit « fil de tresse » 4, en hélice autour de l'âme 3, et ce sur au moins un tour autour de l'axe principal Z3.

Le poste de tressage 7 pourra comporter à cet effet un carrousel d'entraînement 7A qui reçoit l'âme 3 et entraîne ladite âme 3 en rotation azimutale autour de l'axe principal Z3, ainsi qu'un dévidoir 7B rotatif, qui tourne en lacet autour de la tangente à l'âme 3, en un point choisi du poste de tressage 7 par lequel passe la trajectoire de l'âme 3 telle que définie par le carrousel 7A, et à partir duquel se dévide, sous une tension mécanique contrôlée, le fil de tresse 4, de manière à ce que la composition des mouvements du carrousel 7A et du dévidoir 7B produise l'enroulement en hélice du fil de tresse 4 autour de l'âme 3.

A titre d'exemple, le carrousel 7A pourra comprendre des mors 7D antagonistes, dont un seul est ici visible sur la figure 1, qui forment chacun un « chemin de galets » défini par une succession de galets 7C, d'axes parallèles entre eux, qui sont disposés selon un secteur angulaire de la trajectoire de rotation que l'on souhaite conférer à l'âme 3 pendant l'opération de tressage.

Lesdits mors 7D pourront être amenés à l'intérieur du périmètre délimité par l'âme 3, puis écartés les uns des autres de manière radiale centrifuge jusqu'à ce que leurs galets 7C viennent s'appliquer contre l'âme 3 et mettent légèrement ladite âme 3 en tension. Cette précontrainte de traction permettra au carrousel 7A d'engrener par friction sur l'âme 3 afin d'entraîner celle-ci en rotation.

Quel que soit l'agencement retenu pour le poste de tressage 7, l'entrelacement du fil de tresse 4 sur au moins un tour, c'est-à-dire sur au moins 360 degrés, et de préférence successivement sur plusieurs tours entiers, autour de l'axe principal Z3 permet d'une part de renforcer toute la longueur de l'âme 3, et donc *in fine* toute la longueur de la tringle 2, au moyen dudit fil de tresse 4, et d'autre part de fermer le fil de tresse 4 sur lui-même pour assurer le maintien dudit fil de tresse 4 sur l'âme 3.

A ce titre, on notera que, lors de l'opération de tressage, on prévoit, en azimut autour de l'axe principal Z3, un second secteur angulaire S8 qui est destiné à accueillir une jonction, dite « jonction de tresse » 8, entre un premier tronçon d'extrémité 4A du fil de tresse 4 et un second tronçon d'extrémité 4B du fil de tresse 4 afin de maintenir ledit fil de tresse 4 fermé sur lui-même autour dudit axe principal Z3, tel que cela est illustré sur la figure 6.

La jonction de tresse 8 pourra être réalisée, après l'opération de tressage, par tout moyen de jonction de tresse 9 approprié permettant de relier et de fixer l'un à l'autre les tronçons d'extrémité 4A, 4B du fil de tresse 4, qui forment les extrémités longitudinales du fil de tresse 4 considéré.

Le moyen de jonction de tresse 9 pourra être par exemple un joint de soudure, ou un fil de ligature rapporté, ou bien encore, de préférence, un manchon, dit « manchon de tresse », qui est engagé et serti autour des deux tronçons d'extrémité 4A, 4B, tel que cela est illustré sur la figure 6.

Par commodité de description, on pourra assimiler le moyen de jonction de tresse 9 à un manchon de tresse 9 dans ce qui suit.

La jonction de tresse 8 pourra être réalisée sur un poste de fixation 10 approprié, qui pourra éventuellement être situé sur le poste de tressage 7, ou, de préférence, en aval dudit poste de tressage 7, sur une machine séparée du poste de tressage, comme cela est illustré en pointillés sur la figure 1.

De préférence, quelle que soit sa localisation, ledit poste de fixation 10 sera un poste de manchonnage, mettant en oeuvre un manchon de tresse 9.

A ce titre, l'installation comporte donc de préférence un poste de manchonnage 10, qui est agencé pour réunir et fixer l'un à l'autre le premier tronçon d'extrémité 4A du fil de tresse 4 et le second tronçon d'extrémité 4B du fil de tresse 4 au moyen d'un manchon, dit « manchon de tresse » 9, qui est serti, dans le second secteur angulaire S8.

En pratique, le second secteur angulaire S8 correspondra au secteur angulaire qu'occupe, une fois la jonction de tresse 8 réalisée, le moyen de jonction de tresse 9 (joint de soudure, fil de ligature, ou, de préférence, manchon de tresse) qui assure ladite jonction de tresse 8.

Bien entendu, lors de l'opération de tressage, on pourra agencer le fil de tresse 4 de telle sorte que les tronçons d'extrémité 4A, 4B dudit fil de tresse soient laissés libres, en attente, avec un surplus de longueur, de manière à ce que lesdits tronçons d'extrémité 4A, 4B du fil de tresse 4 puissent ensuite être coupés pour être ajustés en longueur, lors de l'opération de fixation, avant la mise en oeuvre du moyen de jonction de tresse 9, et notamment avant sertissage dans le manchon de tresse 9.

Bien entendu, on prévoira en conséquence, lors du tressage, l'emplacement du second secteur angulaire S8, que l'on réserve pour la mise en place du moyen de jonction 9.

Selon une possibilité de mise en oeuvre, à l'issue de l'opération de tressage à proprement parler, les tronçons d'extrémité 4A, 4B du fil de tresse 4, laissés libres en attente avant la réalisation de la jonction de tresse 8, se croiseront en un point dit « point de croisement », et le second secteur angulaire S8 pourra correspondre audit point de croisement, et plus particulièrement à un secteur angulaire de taille prédéterminée qui sera attaché audit point de croisement des deux tronçons d'extrémité 4A, 4B du fil de tresse 4, et par exemple à un secteur angulaire de taille prédéterminée qui sera sensiblement centré, angulairement, sur ledit point de croisement.

Ainsi, on réalisera l'opération de tressage en ayant au préalable positionné convenablement l'âme 3 sur le poste de tressage 7, de telle manière que lorsque l'opération de tressage s'achève, le point de croisement des deux tronçons d'extrémité 4A, 4B libres du fil de tresse 4 qui résulte de ladite opération de tressage est contenu dans un second secteur angulaire S8 prédéterminé, dont la position est, comme on le verra par la suite, choisie et maîtrisée par rapport au premier secteur angulaire S6 occupé par la jonction d'âme 6.

Par commodité de description, on pourra distinguer au besoin, par exemple sur la figure 1 :
- une « tringle semi-finie » 2_part, qui comprend l'âme 3 entourée de son fil de tresse 4 dont les tronçons d'extrémité 4A, 4B sont laissés provisoirement en attente de réalisation de la jonction de tresse 8 ;
- une « tringle finie » 2_full, qui comprend l'âme 3 entourée de son fil de tresse 4 qui est fermé et effectivement maintenu par la jonction de tresse 8.

Selon une configuration possible de l'installation 1, le poste d'amenée 5 et le poste de tressage 7 peuvent être regroupés sur un même bâti 11, tel que cela est illustré sur la figure 1.

Un tel agencement offrira en effet une bonne compacité, ainsi qu'une bonne précision, dans la mesure où il permet de définir et de conserver l'information de position et d'orientation de l'âme 3 dans un référentiel machine commun, entre les différents postes, notamment entre le poste d'amenée 5 et le poste de tressage 7.

Le poste de fixation 10, ici le poste de manchonnage 10 permettant le sertissage du manchon de tresse 9 sur les tronçons d'extrémité 4A, 4B du fil de tresse, peut être situé soit sur ce même bâti 11 portant le poste d'amenée 5 et le poste de tressage 7, soit à distance dudit bâti 11, sur un second bâti 12 séparé, vers lequel on pourra transférer, après tressage, les âmes 3 revêtues de leur fil de tresse 4.

Dans tous les cas, on pourra prévoir un poste de stockage tampon 13 qui suit le poste de tressage 7 et qui précède le poste de manchonnage 10, de sorte à former une zone de stockage tampon entre ces deux opérations de tressage puis de manchonnage.

Selon l'invention, l'installation 1 comporte un système de contrôle en azimut 14.

Ledit système de contrôle en azimut 14 comprend tout d'abord un dispositif de détection 15 qui est agencé pour détecter sur l'âme 3 un élément de repérage 16 par rapport auquel la position du premier secteur angulaire S6 est connue.

Avantageusement, l'élément de repérage 16 permet de définir et d'identifier l'origine d'un repère, attaché à l'âme 3, dans lequel la position, en l'espèce la position angulaire en azimut autour de l'axe principal Z3, ainsi que l'étendue du premier secteur angulaire S6, sont connues.

L'élément de repérage 16 forme ainsi une marque de référence, qui renseigne sur la position du premier secteur angulaire S6, et qui permet donc au dispositif de détection 15 de réaliser une acquisition de l'origine du repère (ici un repère d'orientation en azimut) attaché à l'âme 3.

On notera que l'élément de repérage 16 peut matériellement coïncider avec le premier secteur angulaire S6, et notamment avec une limite dudit premier secteur angulaire S6, ou bien être situé en-dehors dudit premier secteur angulaire S6, à une distance angulaire connue dudit premier secteur angulaire S6 en azimut autour de l'axe principal Z3.

L'élément de repérage 16, de préférence unique sur le pourtour de l'âme 3, pourra être de toute nature, dès lors qu'il est possible d'identifier ledit élément de repérage 16 sur l'âme 3 et de l'utiliser comme point de référence pour définir une position azimutale et/ou une abscisse curviligne autour de l'axe principal Z3, par rapport audit point de référence.

A titre d'exemple, l'élément de repérage 16 pourra être formé par un relief particulier, tel que la jonction d'âme 6 elle-même si ladite jonction d'âme 6 forme une saillie ou au contraire un creux reconnaissable à la surface de l'âme 3.

En variante, l'élément de repérage 16 pourrait être un marquage optique, tel qu'une marque opaque ou réfléchissante réalisée par exemple par une peinture, ou bien encore un marquage magnétique obtenu par aimantation d'une zone particulière de l'âme 3, etc.

Selon une possibilité de réalisation, le dispositif de détection 15 peut comprendre un capteur de ressaut 17, qui est agencé pour balayer la surface de l'âme 3 afin de détecter un ressaut 16_offset qui est formé sur la surface de l'âme 3 et qui constitue l'élément de repérage 16, tel que cela est illustré sur les figures 5 et 7.

Le ressaut 16_offset peut être formé par tout relief approprié, saillant ou au contraire rentrant, tel qu'un bourrelet de soudure présent au niveau de la jonction d'âme 6, comme cela est illustré sur la figure 7, ou bien tel qu'un épaulement, une encoche, un méplat, une indentation, une surépaisseur de matière liée à la présence d'un manchon, etc., dès lors que ledit ressaut 16_offset forme une irrégularité identifiable, de manière reproductible d'une âme 3 à l'autre, par sa forme ou par ses dimensions.

A titre indicatif, le capteur de ressaut 17 pourra être agencé pour détecter un ressaut 16_offset présentant une hauteur de relief (en saillie ou en creux), ici une variation radiale - de préférence en saillie - par rapport à l'axe principal Z3, d'au moins 0,5 mm, et par exemple comprise entre 0,5 mm et 2 mm, et de préférence entre 0,5 mm et 1 mm.

Le capteur de ressaut 17 pourra utiliser toute technologie de détection appropriée, et former par exemple un palpeur mécanique appliqué contre la surface de l'âme 3, un capteur inductif ou capacitif, un capteur optique sensible à la variation de section de l'âme 3 due au ressaut 16_offset, etc.

A titre d'exemple, le passage du ressaut 16_offset devant le capteur de ressaut 17 pourra provoquer l'apparition d'un signal de type front montant ou front descendant, auquel on associera l'origine du repère attaché à l'âme 3.

Selon une autre possibilité de réalisation, qui peut être alternative ou complémentaire à la présence d'un capteur de ressaut 17, le dispositif de détection 15 peut comprendre un capteur magnétique 18 qui est agencé pour détecter sur l'âme 3 un élément de repérage 16 formé par un marquage magnétique 16_magn, et/ou un capteur optique agencé pour détecter sur l'âme un élément de repérage 16 formé par un marquage optique 16_opt.

Un marquage magnétique 16_magn pourra notamment être réalisé, de façon connue en soi, en procédant, préalablement à l'amenée de l'âme 3, à une aimantation provisoire et locale du ou des fils d'âme, en un point de l'âme 3 choisi comme approprié.

On pourra par exemple réaliser ledit marquage magnétique 16_magn en un point diamétralement opposé à la jonction d'âme 6 par rapport à l'axe principal Z3, c'est-à-dire situé sensiblement à 180 degrés en azimut de ladite jonction d'âme 6, tel que cela est illustré sur la figure 5.

On notera par ailleurs que, de préférence, on pourra utiliser un capteur de ressaut 17 lorsque l'on traite des âmes 3 monobrin dont la jonction d'âme 6 est formée par un bourrelet de soudure, afin d'utiliser ledit bourrelet de soudure comme élément de repérage 16 de type ressaut 16_offset, tandis que l'on utilisera de préférence un marquage magnétique 16_magn pour les âmes 3 multibrins à jonction d'âme 6 manchonnée.

En effet, dans le cas d'une âme 3 multibrins à jonction d'âme manchonnée, il est possible que le manchon d'âme, selon sa forme et son agencement, ne forme pas systématiquement, contrairement à un bourrelet de soudure, de surépaisseur qui soit effectivement détectable par un palpeur mécanique. Il peut donc être plus judicieux et plus fiable de recourir à un marquage magnétique 16_magn.

Avantageusement, le fait de prévoir sur l'installation 1 plusieurs types de capteurs 17, 18 complémentaires capables d'identifier différents types d'éléments de repérage 16, et en particulier le fait de prévoir à la fois un capteur de ressaut 17 et un capteur magnétique 18, permettra de traiter sur une même installation 1, polyvalente, plusieurs types d'âmes 3, et plus particulièrement aussi bien des âmes 3 monobrin à jonction d'âme 6 soudée que des âmes multibrins à jonction d'âme 6 manchonnée.

Selon l'invention, le système de contrôle en azimut 14 comprend également un dispositif de positionnement 20 qui permet d'adapter l'orientation en azimut de l'âme 3, par référence à l'élément de repérage 16, pour la mise en oeuvre de ladite âme 3 sur le poste de tressage 7, de telle manière que le second secteur angulaire S8 prévu par le poste de tressage 7 pour la jonction de tresse 8 ne chevauche pas le premier secteur angulaire S6 occupé par la jonction d'âme 6.

Grâce au contrôle en azimut ainsi opéré, on s'assure de placer l'âme 3 de façon non aléatoire, en particulier au moment de débuter et de réaliser l'opération de tressage, de telle manière que l'on évite, à l'issue du tressage et, finalement, dans la tringle 2 obtenue, une superposition angulaire de la jonction de tresse 8 et de la jonction d'âme 6.

Avantageusement, le dispositif de détection 15 permet en effet d'inspecter l'âme 3 de sorte à y détecter un élément de repérage 16 qui permet d'attacher un repère à ladite âme 3, et d'établir une relation entre ce repère et le référentiel de l'installation 1, et en particulier d'établir une relation entre ce repère, attaché à l'âme 3, et l'origine machine du poste de tressage 7.

Le dispositif de positionnement 20 permet quant à lui, avant la réalisation de l'opération de tressage, de positionner l'âme 3, de manière non aléatoire et reproductible d'une âme 3 à l'autre, dans ledit référentiel de l'installation 1, et plus particulièrement dans le référentiel du poste de tressage 7, de telle manière que l'on puisse réaliser l'opération de tressage par rapport à l'élément de repérage 16 identifié, et donc en prenant en considération la position azimutale du premier secteur angulaire S6 occupé par la jonction d'âme 6, si bien que le second secteur angulaire S8 qui résulte de ladite opération de tressage et qui accueille la jonction de tresse 8 est angulairement distant du premier secteur angulaire S6 dans lequel se trouve la jonction d'âme 6.

En contrôlant la répartition des premier et second secteurs angulaires S6, S8, et plus particulièrement en fixant la plage angulaire de l'âme 3, et plus globalement la plage angulaire de la tringle 2, à l'intérieur de laquelle on autorise la présence du second secteur angulaire S8, et donc en choisissant la position de la jonction de tresse 8, par rapport à la position de la jonction d'âme 6, on évite avantageusement de concentrer ou de superposer dans un même secteur angulaire des points singuliers, en l'espèce des jonctions 6, 8, qui sont potentiellement constitutives de zones d'irrégularité de forme ou d'irrégularité de répartition de masse, ou de zones de moindre résistance mécanique.

De préférence, tel que cela est notamment illustré sur les figures 5 et 6, le système de contrôle en azimut 14 est agencé pour placer de manière reproductible le second secteur angulaire S8, prévu pour la jonction de tresse 8, à une distance azimutale d_azim minimale du premier secteur angulaire S6 occupé par la jonction d'âme 6, dite « distance de séparation azimutale » d_azim, qui est égale ou supérieure à 10 degrés, et/ou, de préférence, égale ou supérieure à 40 mm de longueur d'arc.

Une telle distance de séparation azimutale d_azim permet de garantir, de manière la plus systématique possible, une séparation suffisante des premier et second secteurs angulaires S6, S8, ce qui évite notamment la formation d'une zone de faiblesse, ou d'un balourd trop sensible, en empêchant que la jonction d'âme 6 et la jonction de tresse 8 ne soient trop rapprochées l'une de l'autre.

De même, en évitant de superposer la soudure de la jonction d'âme 6 avec le manchon 9 de la jonction de tresse 8, on évite de constituer sur la tringle 2 une excroissance de matière qui serait notamment susceptible d'induire une usure prématurée de certaines parties du bandage pneumatique équipé de ladite tringle 2.

Par convention, tel que cela est illustré sur la figure 6, la distance de séparation azimutale d_azim minimale pourra être mesurée entre les limites respectives des premier et second secteurs angulaires S6, S8 qui sont les plus proches l'une de l'autre, c'est-à-dire correspondre à l'angle d'azimut qui sépare la limite du premier secteur angulaire S6 qui est la plus proche de l'une des deux limites du second secteur angulaire S8 d'une part, de ladite une des deux limites du second secteur angulaire S8 d'autre part.

En pratique, la distance de séparation azimutale d_azim pourra être de préférence comprise entre 10 degrés et 120 degrés, et plus particulièrement entre 10 degrés et 60 degrés, voire entre 10 degrés et 30 degrés, notamment pour favoriser la robustesse et l'équilibre de la tringle 2.

Avantageusement, l'invention visera ainsi à garantir, de la manière la plus systématique possible, que chaque tringle 2 produite présente un agencement relatif de la jonction de tresse 8 par rapport à la jonction d'âme 6 qui satisfasse à ce critère de distance de séparation azimutale d_azim maîtrisée.

On notera que la distance de séparation azimutale d_azim pourra être exprimée indifféremment soit sous forme d'un angle d'azimut, comme indiqué ci-dessus, soit, notamment par commodité d'asservissement du système de contrôle en azimut 14, sous forme d'une longueur d'arc, considérée le long de l'âme 3.

A titre indicatif, et en particulier sur des tringles 2 de diamètre adapté à des pneumatiques de dimensions comprises entre 13 pouces et 24 pouces, la distance de séparation azimutale d_azim pourra être égale ou supérieure à 40 mm, de préférence égale ou supérieure à 50 mm, et plus globalement comprise entre 40 mm et une valeur égale à 90%, voire 95%, de la moitié de la longueur du périmètre de l'âme 3 autour de l'axe principal Z3.

Selon un exemple préférentiel de mise en oeuvre, la distance de séparation azimutale d_azim, exprimée en longueur d'arc, sera choisie égale à 55 mm.

De préférence, le système de contrôle en azimut 14 sera automatisé, afin de garantir la rapidité, la précision, et la reproductibilité de la détection de l'élément de repérage 16, par un dispositif de détection 15 qui est automatique, puis du positionnement en azimut de l'âme 3, par un dispositif de positionnement 20 qui est automatique.

De préférence, l'installation 1 comporte un mécanisme de guidage et d'entraînement 21 qui est agencé pour guider et entraîner l'âme 3 en rotation azimutale autour de son axe principal Z3, selon un chemin dit « chemin d'âme » T21 défini par ledit mécanisme de guidage et d'entraînement 21, de sorte à pouvoir tout d'abord faire défiler l'âme 3, ici de préférence à travers le dispositif de détection 15 et plus particulièrement devant le ou les capteurs 17, 18 correspondants, jusqu'à ce que le dispositif de détection 15 détecte l'élément de repérage 16, puis ensuite ajuster la position azimutale de ladite âme 3 par rapport audit élément de repérage 16, selon une configuration prédéterminée, telle que définie par le dispositif de positionnement 20.

Sur les figures 2, 3, 5 et 7, le chemin d'âme T21 est, concrètement, matérialisé par l'âme 3 qui se trouve engagée dans le mécanisme de guidage et d'entraînement 21.

Le mécanisme de guidage et d'entraînement 21 peut être animé par un moteur d'entraînement 22, de préférence électrique.

Ce moteur d'entraînement 22 transmet de préférence un mouvement à un organe d'entraînement 23 qui agit à son tour sur l'âme 3 pour entraîner cette dernière en rotation azimutale.

De préférence, tel que cela est visible sur les figures 3 et 7, ledit organe d'entraînement 23 pourra être formé par un galet d'entraînement, de préférence à axe vertical, qui vient en appui contre l'âme 3 pour entraîner cette dernière par friction. Dans ce qui suit, on pourra donc, par commodité, assimiler l'organe d'entraînement 23 à un galet d'entraînement par friction.

Tel que cela est illustré schématiquement sur la figure 5, le mécanisme de guidage et d'entraînement 21, et plus globalement le système de contrôle en azimut 14, pourra de préférence fonctionner comme suit :
- initialement, l'âme 3 est réceptionnée dans le chemin d'âme T21, dans une position azimutale quelconque, dans laquelle la position initiale P16_1 de l'élément de repérage 16, ici la position de la jonction d'âme 6, qui est illustrée en trait plein sur la figure 5, est inconnue ;
- le mécanisme de guidage et d'entraînement 21 déplace alors l'âme 3 en rotation azimutale autour de l'axe principal Z3, ici dans le sens horaire sur la figure 5, jusqu'à ce que l'élément de repérage 16 passe devant le capteur du dispositif de détection 15, ici plus particulièrement jusqu'à ce que la jonction d'âme 6 passe devant le capteur de ressaut 17 ; ledit élément de repérage 16 se trouve alors dans une seconde position, dite «position de détection » P16_2, illustrée en pointillés sur la figure 5, laquelle position se trouve ainsi bien identifiée par rapport au référentiel de l'installation 1 ;
- une fois l'élément de repérage 16 détecté, le mécanisme de guidage et d'entraînement 21 peut ensuite poursuivre la rotation azimutale de l'âme 3, dans le même sens (ici dans le sens horaire), selon une course angulaire prédéterminée, dite « course de positionnement », jusqu'à ce que l'âme 3 atteigne une configuration qui permette de respecter la distance de séparation azimutale d_azim voulue entre le premier secteur angulaire S6 et le second secteur angulaire S8 ; l'élément de repérage 16 (et donc la jonction d'âme 6) occupe alors une troisième position P16_3 correspondante, dite « position finale » P16_3, tel que cela est illustré en pointillés sur la figure 5.

La course de positionnement pourra par exemple être assurée en maintenant la consigne d'alimentation du moteur d'entraînement 22, après que l'on a détecté l'élément de repérage 16, pendant un temps prédéterminé qui aura été établi par des étalonnages préalables.

Ceci étant, on pourra bien entendu réaliser, par tout capteur approprié, une mesure des déplacements angulaires en azimut de l'âme 3, ou, de manière équivalente, une mesure linéaire de la longueur d'arc parcourue par ladite âme 3, et donc réaliser une indexation et une mesure des positions de la jonction l'âme 6, du premier secteur angulaire S6 et/ou de l'élément de repérage 16 dans le repère de l'installation 1, et plus particulièrement dans le repère associé au dispositif de positionnement 20 et au poste de tressage 7.

Par exemple, ces mesures pourront être fournies au moyen d'un capteur de position qui est intégré au moteur d'entraînement 22, tel qu'un capteur de type resolver.

Dans un exemple de mise en oeuvre correspondant à un agencement de système de contrôle en azimut 14 conforme à la figure 5, et dans lequel l'élément de repérage 16 se confond avec la jonction d'âme 6, et plus particulièrement lorsque l'élément de repérage 16 est formé par un ressaut 16_offset correspondant au bourrelet de soudure de la jonction d'âme 6, alors la course de positionnement, qui permet de passer de la position de détection P16_2 à la position finale P16_3, pourra être égale à la somme, ici dans le sens horaire de rotation considéré, de :
- une course dite « course d'alignement haut », qui permet de faire passer l'élément de repérage 16, et donc ici la jonction d'âme 6, de la position de détection P16_2 à la position du point haut 3_top de l'âme 3, ladite course d'alignement haut correspondant donc à la distance qui sépare le capteur de ressaut 17 du point haut 3_top qui vient après ledit capteur de ressaut 17 dans le sens de rotation considéré (ici le sens horaire),
- un demi-tour supplémentaire, c'est-à-dire une poursuite de rotation azimutale égale à 180 degrés, qui permet de faire passer l'élément de repérage 16, et donc ici la jonction d'âme 6, d'une position au point haut 3_top à une position au point bas 3_low, sachant que le point bas 3_low correspondra après tressage à la position de la jonction de tresse 8,
- une course dite « course de décalage », qui est égale à la distance de séparation azimutale d_azim souhaitée, par exemple 55 mm de longueur d'arc, et qui permet de faire passer, ici dans le sens horaire, l'élément de repérage 16, et donc la jonction d'âme 6, du point bas 3_low à la position finale P16_3, située à la distance souhaitée de la future jonction de tresse 8.

De manière analogue, dans un autre exemple où l'on utilisera cette fois un marquage magnétique 16_magn diamétralement opposé à la jonction d'âme 6, la course de positionnement sera égale à la somme, ici dans le sens horaire de rotation considéré, de :
- une course d'alignement haut qui correspond à la distance qui permet de faire passer l'élément de repérage 16_magn de la position de détection P16_2 à la position du point haut 3_top de l'âme 3, ladite course d'alignement haut correspondant donc ici à la distance qui sépare le capteur magnétique 18 du point haut 3_top qui suit ledit capteur magnétique 18 dans le sens de rotation considéré (ici le sens horaire) ; concomitamment, le fait de placer le marquage magnétique 16_magn au point haut 3_top a pour effet de placer la jonction d'âme 6 diamétralement opposée au point bas 3_low, si bien qu'il n'est pas nécessaire de prévoir un demi-tour supplémentaire ;
- une course de décalage qui est égale à la distance de séparation azimutale d_azim souhaitée, par exemple 55 mm de longueur d'arc, et qui permet de faire passer, ici dans le sens horaire, la jonction d'âme 6 du point bas 3_low à une position finale, située à la distance de séparation azimutale d_azim de la future jonction de tresse 8.

On notera par ailleurs que le dispositif de détection 15 et le dispositif de positionnement 20 partagent de préférence un même mécanisme de guidage et d'entraînement 21 commun, ce qui permet notamment à l'installation 1 de gagner en compacité et au système de contrôle en azimut 14 de gagner en précision, grâce à l'utilisation d'un référentiel machine qui est commun auxdits dispositif de détection 15 et de positionnement 20.

Selon une caractéristique préférentielle qui peut constituer une invention à part entière, le mécanisme de guidage et d'entraînement 21 est agencé de sorte que le chemin d'âme T21 qu'il définit est sensiblement contenu dans un plan vertical, tel que cela est visible notamment sur les figures 2, 3, 4, 5 et 7.

A cet effet, ledit mécanisme de guidage et d'entraînement 21 comprend de préférence, tel que cela est visible notamment sur les figures 3 et 5, un ou plusieurs organes porteurs 24 agencés pour soutenir verticalement l'âme 3, ainsi qu'au moins un organe d'entraînement 23 agencé pour agir sur l'âme 3 afin d'entraîner ladite âme en déplacement le long du chemin d'âme T21.

Les organes porteurs 24 agencés pour soutenir verticalement l'âme 3 pourront être formés par exemple par des diabolos 24, de préférence montés en libre rotation sur des axes horizontaux.

Comme indiqué plus haut, l'au moins un organe d'entraînement 23 pourra être formé par un galet d'entraînement par friction 23.

Cette configuration verticale du chemin d'âme T21 revient à ce que le mécanisme de guidage et d'entraînement 21 oriente et maintienne l'axe principal Z3 de l'âme 3 sensiblement à l'horizontale, typiquement dans une plage comprise entre +10 degrés et -10 degrés en tangage, de préférence entre +5 degrés et -5 degrés en tangage, voire exactement à l'horizontale.

Une telle configuration verticale présente de nombreux avantages.

Un premier avantage est qu'une telle configuration verticale permet d'exploiter la gravité pour acheminer l'âme 3 jusqu'au chemin d'âme T21, pour engager et pour auto-aligner spontanément, de manière reproductible et stable, ladite âme 3 dans ledit chemin d'âme T21. On facilite ainsi l'amenée de l'âme 3 puis la manipulation de celle-ci par le mécanisme de guidage et d'entraînement 21.

De même, une telle configuration verticale garantit une meilleure stabilité de l'âme 3 lors de la préhension de ladite âme par sa partie supérieure, en vue du transfert de ladite âme 3 vers le poste de tressage 7.

Un second avantage de la configuration verticale tient à la faible emprise au sol du mécanisme de guidage et d'entraînement 21, qui permet de réaliser une installation 1 compacte.

Un troisième avantage de la configuration verticale est que l'on peut ainsi laisser libre et accessible la partie basse de l'âme 3, et notamment (au moins) la moitié inférieure de l'âme 3, ce qui permet notamment d'utiliser le point bas 3_low de l'âme 3, c'est-à-dire le point de l'âme 3 qui se situe à l'altitude la plus basse (parmi l'ensemble des points constitutifs de ladite âme 3), comme référence, et plus particulièrement comme point de départ, pour l'opération de tressage.

Plus particulièrement, lorsque l'âme 3 est orientée en azimut en amont du poste de tressage 7, au sein d'un mécanisme de guidage et d'entraînement 21 qui précède ledit poste de tressage 7, puis ensuite transférée sur ledit poste de tressage 7, après que l'orientation azimutale correcte a été identifiée et obtenue, on peut ainsi conserver l'orientation azimutale de l'âme 3 lors du transfert entre le mécanisme de guidage et d'entraînement 21 et le poste de tressage 7, et plus spécifiquement conserver le point bas 3_low, de manière à ce que le point bas 3_low de l'âme 3, tel qu'il est utilisé sur le poste de tressage 7, soit le même que le point bas 3_low qui a été précédemment mis en place lors du positionnement azimutal de ladite âme 3 par le mécanisme de guidage et d'entraînement 21.

Il est ainsi aisé de conserver le lien établi, par le système de contrôle en azimut 14, entre le référentiel de l'installation 1, et plus particulièrement le référentiel-machine du poste de tressage 7, d'une part et le référentiel attaché à l'âme 3 manipulée d'autre part, ce qui évite une perte de référence lors du transfert, et garantit ainsi la précision du tressage puis, en conséquence, la précision du positionnement de la jonction de tresse 8 par rapport à la jonction d'âme 6.

Selon une possibilité préférentielle de mise en oeuvre, on pourra faire coïncider le point bas 3_low de l'âme 3, tel que ce point bas 3_low résulte du positionnement azimutal de ladite âme 3 par le mécanisme de guidage et d'entraînement 21, avec le second secteur angulaire S8 destiné à recevoir la jonction de tresse 8, tel que cela est illustré sur la figure 6.

En effet, ledit point bas 3_low de l'âme pourra avantageusement être utilisé comme point de départ de l'opération de tressage, au niveau duquel on retrouvera par conséquent le premier tronçon d'extrémité 4A libre du fil de tresse, qui marque le début du fil de tresse et précède donc les spires du fil de tresse 4 enroulées autour de l'âme 3, puis comme point d'arrivée en fin de tressage, au niveau duquel on retrouve le second tronçon d'extrémité 4B libre dudit fil de tresse 4, qui marque la fin des spires et du fil de tresse 4.

Ainsi, la jonction de tresse 8, qui s'opérera entre les deux tronçons d'extrémité 4A, 4B du fil de tresse 4, sera finalement située au niveau dudit point bas 3_low de l'âme, tel qu'il a été mis en oeuvre sur le poste de tressage 7.

Selon une caractéristique préférentielle qui peut constituer une invention à part entière, le mécanisme de guidage et d'entraînement 21 est porté par un support 25 réglable en hauteur, du genre potence, qui permet d'ajuster, de préférence automatiquement, l'altitude du mécanisme de guidage et d'entraînement 21 en fonction du diamètre annulaire D3 de l'âme 3, et ainsi de positionner dans une plage d'altitude prédéfinie, de manière reproductible d'un âme 3 à l'autre, le point bas 3_low de l'âme 3 qui est présente à l'instant considéré au sein dudit mécanisme de guidage et d'entraînement 21.

Avantageusement, ceci confère à l'installation 1 une grande polyvalence, puisqu'elle peut s'adapter à différentes tailles d'âmes 3, et plus globalement s'adapter à la fabrication de différentes tailles de tringles 2, de diamètres annulaires D3 distincts, tout en conservant la possibilité d'utiliser dans chaque cas le point bas 3_low de l'âme, tel que ledit point bas 3_low a été choisi lors du positionnement en azimut, comme référence lors de l'opération de tressage.

Quel que soit le diamètre annulaire D3 de l'âme 3, on pourra ainsi utiliser le point bas 3_low de l'âme comme point de référence, et plus particulièrement comme point de départ, de l'opération de tressage.

Le support 25 réglable en hauteur pourra utiliser tout système de guidage et de motorisation adapté pour réaliser un réglage en hauteur par rapport au bâti 11.

A titre d'exemple, le support 25 pourra comporter, tel que cela est illustré sur la figure 2, une glissière formée par une platine 26, qui embarque le mécanisme de guidage et d'entraînement 21, et qui est montée coulissante en translation le long d'un rail 27 vertical, par exemple au moyen de patins à billes ou au moyen d'un emboîtement prismatique tel qu'une queue d'aronde.

Les déplacements verticaux de la platine 26 et son maintien dans la position verticale souhaitée pourront par exemple être assurés par une vis sans fin motorisée, couplée à un écrou ou à une douille à billes solidaire de ladite platine 26.

Selon une possibilité préférentielle de réalisation, le mécanisme de guidage et d'entraînement 21 peut, tel que cela est visible notamment sur les figures 2, 3 et 7, comprendre au moins un galet d'entraînement 23, de préférence à axe de rotation Z23 vertical, qui vient en appui contre l'âme 3 pour entraîner ladite âme 3 par friction, ainsi que, en vis-à-vis dudit au moins un galet d'entraînement 23, un contre-galet 28 qui définit, avec le galet d'entraînement 23, un interstice 29 à travers lequel passe le chemin d'âme T21.

De préférence, ledit contre-galet 28 est mobile, en translation ou, préférentiellement, en basculement, selon une direction dite « direction de recul » F28 transverse au chemin d'âme T21, et est rappelé contre l'âme 3 par un organe de rappel 30, du genre ressort ou contrepoids, de telle sorte que ledit contre-galet 28 forme un palpeur mécanique d'un capteur de ressaut 17, apte à détecter le ressaut 16_offset de l'âme qui constitue l'élément de repérage 16, tel que cela est illustré sur la figure 7.

Le contre-galet 28 est de préférence monté en rotation libre sur son axe de rotation Z28.

Ledit axe de rotation Z28 du contre-galet 28 est de préférence porté par un levier 31 qui est monté en pivot 32 sur le support 25.

On notera que, de préférence, le levier 31 peut former, par son propre poids, l'organe de rappel 30 qui plaque le contre-galet 28 contre la surface de l'âme 3. La structure du capteur de ressaut 17 s'en trouve ainsi simplifiée, et la sensibilité dudit capteur de ressaut 17 améliorée.

De préférence, le levier 31 porte le noyau mobile 33 d'un capteur de déplacement 34, tel qu'un capteur magnétique, capacitif, ou inductif, par exemple un capteur de déplacement 34 à commutateur magnétique à solénoïde, de telle sorte qu'un mouvement d'éloignement du contre-galet 28 dans la direction de recul F28, provoqué par le passage d'un ressaut 16_offset tel qu'un bourrelet de soudure formant la jonction d'âme 6, est transmis voire amplifié par le levier 31, qui déplace en conséquence ledit noyau mobile 33 et permet ainsi la détection du ressaut 16_offset par le capteur de déplacement 34, tel que cela est illustré sur la figure 7.

Bien entendu, le seuil de sensibilité du capteur de ressaut 17, et plus particulièrement du capteur de déplacement 34, sera fixé en fonction de la profondeur du ressaut 16_offset attendu, c'est-à-dire en fonction d'une valeur prédéterminée de variation dimensionnelle attendue de la section droite de l'âme 3.

Le cas échéant, l'effet d'amplification procuré par le levier 31 rendra plus facilement perceptible le recul du palpeur mécanique (contre-galet 28), et facilitera donc la détection de l'élément de repérage 16 de type ressaut 16_offset, même si ledit ressaut 16_offset est de faible profondeur.

On notera également que l'effet de pincement exercé sur l'âme 3 présente dans l'interstice 29 par le contre-galet 28, qui est rappelé (ici par le poids du levier 31) à l'encontre du galet d'entraînement 23, assure un guidage et un maintien stable de l'âme 3 dans ledit interstice 29, sur le chemin d'âme T21 prévu, lorsque ladite âme 3 est portée et/ou entraînée en rotation azimutale par le mécanisme de guidage et d'entraînement 21, entre lesdits galet 23 et contre-galet 28 qui sont placés de part et d'autre de ladite âme 3 et qui délimitent latéralement ledit chemin d'âme T21.

De préférence, en position de repos, c'est-à-dire lorsque le contre-galet 28 appuie contre une surface de l'âme 3 qui ne correspond pas au ressaut 16_offset à détecter, l'axe de rotation Z28 du contre-galet 28 est sensiblement parallèle à l'axe de rotation Z23 du galet d'entraînement 23.

Selon un agencement préférentiel, l'axe de rotation Z28 du contre-galet 28 est, au repos, sensiblement vertical (par exemple à +/- 10 degrés par rapport à la verticale), de sorte à pouvoir définir, avec le galet d'entraînement 23 à axe sensiblement vertical, un interstice 29 sensiblement vertical qui favorise l'insertion de l'âme 3 dans le chemin d'âme T21 et le guidage de ladite âme 3 lors de sa rotation azimutale. Un tel agencement convient en particulier à une configuration verticale du chemin d'âme T21, dont les avantages ont été décrits plus haut.

On notera à ce titre que, en projection dans un plan vertical contenant l'axe principal de l'âme Z3, l'interstice 29 est alors de préférence sensiblement aligné avec les gorges des diabolos 24 destinés à soutenir verticalement l'âme 3.

De préférence, le galet d'entraînement 23 et/ou le contre-galet 28 pourront par ailleurs présenter chacun au moins une extrémité libre chanfreinée 23A, 28A pour favoriser l'accueil et l'auto-centrage de l'âme dans l'interstice 29, entre lesdits galet 23 et contre-galet 28.

Par ailleurs, selon une caractéristique préférentielle qui peut constituer une invention à part entière, le poste d'amenée 5 comprend un dispositif de triage 40 qui comporte d'une part un organe de centrage 41 pourvu d'au moins une rampe de guidage 42 qui est agencée pour recevoir une âme 3 et permettre à ladite âme 3 de glisser, par gravité, le long de ladite rampe de guidage 42, jusqu'au mécanisme de guidage et d'entraînement 21, et d'autre part un convoyeur 43, par exemple un convoyeur à vis sans fin 44, agencé pour amener et lâcher des âmes 3 une par une à l'aplomb de l'organe de centrage 41, tel que cela est notamment illustré sur la figure 4.

De préférence, l'organe de guidage 41 comprend deux rampes de guidage 42 possédant chacune au moins une portion inclinée 42A, lesdites portions inclinées 42A desdites deux rampes convergeant sensiblement l'une vers l'autre en entonnoir pour diriger l'âme 3 et permettre à cette dernière de s'engager précisément dans le chemin d'âme T21, tel que cela est illustré sur les figures 3 et 4.

De préférence, ledit entonnoir est à cet effet situé, dans le prolongement de, et de préférence à l'aplomb et au-dessus de, l'interstice 29 délimité entre le galet d'entraînement 23 et le contre-galet 28.

En outre, dans la portion inférieure dudit entonnoir, les rampes de guidage 42 peuvent se prolonger par des portions droites 42B sensiblement parallèles, de préférence verticales, qui définissent entre elles une rainure de guidage 45 dont la largeur, de préférence constante, est légèrement supérieure au diamètre de la section droite de l'âme 3, et inférieure à l'écartement maximal qui sépare les extrémités chanfreinées 23A, 28A respectives du galet d'entraînement 23 et du contre-galet 28, de sorte à canaliser l'âme 3 vers et dans l'interstice 29.

De préférence, tel que cela est illustré sur les figures 1 à 3 et 5, on pourra prévoir deux organes de centrage 41, disposés de part et d'autre de la vis sans fin 44 du convoyeur 43, et de part et d'autre du sous-ensemble formé par le galet d'entraînement 23 et le contre-galet 28, de sorte à assurer un guidage double de l'âme vers l'interstice 29, en soutenant l'âme 3 par deux points de contact qui glissent le long des rampes de guidage 42, ce qui permet de répartir les appuis de l'âme 3 et ainsi de gagner en précision et en stabilité lors du transfert de l'âme 3 jusqu'au mécanisme de guidage et d'entraînement 21.

Le ou les organes de centrage 41 pourront par exemple prendre la forme de plaques, fixées au support 25 réglable en hauteur, de préférence formant des joues placées de chaque côté du sous-ensemble formé par le galet d'entraînement 23 et le contre-galet 28, et dans lesquelles seront découpées les rampes de guidage 42 et en particulier la rainure de guidage 45.

Bien entendu, on pourrait envisager, en variante, tout type d'agencement d'organes de centrage 41, par exemple en réalisant les rampes de guidage 42 au moyen de tiges pleines, de type rails, coudées à la forme souhaitée.

La rainure de guidage 45 pourra être borgne, de sorte à faciliter la réalisation d'un seul tenant de chaque organe de centrage 41 pourvu de deux rampes 42 convergentes qui délimitent ladite rainure de guidage 45.

En pareil cas, ladite rainure de guidage 45 borgne s'étendra bien entendu jusqu'à une altitude inférieure à l'altitude qu'occupe l'âme 3, par rapport à l'organe de centrage 41, lorsque ladite âme 3 repose sur les diabolos 24, de sorte que l'âme 3 puisse rejoindre librement le chemin d'âme T21, puis être entraînée en rotation par le mécanisme de guidage et d'entraînement 21, sans être entravée par l'organe de centrage 41.

Par ailleurs, le dispositif de triage 40 comporte de préférence un compteur d'âme 50, qui comprend par exemple un doigt de comptage 51 basculant, et qui est conçu pour détecter le passage effectif d'une âme 3 entre le convoyeur 43 et le mécanisme de guidage et d'entraînement 21.

Un tel compteur d'âme 50 permet avantageusement de s'assurer de la présence d'une âme 3 dans le mécanisme de guidage et d'entraînement 21, et/ou de l'absence d'un bourrage d'âmes 3 entre le convoyeur 43 et ledit mécanisme de guidage et d'entraînement 21, avant de démarrer la détection de l'élément de repérage 16 et le positionnement de l'âme 3 en azimut.

Avantageusement, l'utilisation d'un doigt basculant 51, qui bascule (ou qui fléchit) sous l'effet du poids de l'âme 3, lorsque ladite âme 3 descend du convoyeur 43 jusqu'au chemin d'âme 21 en étant guidée par les rampes de guidage 42 de l'organe de guidage 41, permet un comptage particulièrement simple et fiable.

Ceci étant, on pourrait, en variante, utiliser tout dispositif de comptage équivalent, par exemple un système à capteur optique qui détecterait la coupure d'un faisceau d'onde par le passage d'une âme 3.

Selon une caractéristique préférentielle qui peut constituer une invention en tant que telle, le poste d'amenée 5 peut comporter un convoyeur 43 à vis sans fin 44, comprenant une tige porteuse filetée 52 rotative qui est agencée de sorte à pouvoir, tel que cela est illustré sur la figure 4, i) recevoir une pluralité d'âmes 3, enfilées sur ladite tige porteuse filetée 52, ii) répartir lesdites âmes 3 le long de ladite tige porteuse filetée 52 à raison d'une âme 3 au plus par pas de vis, et iii) convoyer lesdites âmes 3 en translation le long de ladite tige porteuse filetée 52 lorsque cette dernière est mise en rotation.

On peut ainsi ordonner les âmes 3 et acheminer lesdites âmes 3 une par une jusqu'au mécanisme de guidage et d'entraînement 21, au moyen d'une structure simple, robuste et compacte, qui utilise la tige porteuse filetée 52 comme vis sans fin 44.

Tel que cela est visible notamment sur les figures 1 et 2, la tige porteuse 52 peut être montée en porte-à-faux, sur le même support 25 que le mécanisme de guidage et d'entraînement 21, de préférence au-dessus d'un bras de potence 54 qui porte ledit mécanisme de guidage et d'entraînement 21 et qui est lui-même de préférence fixé sur le support 25 réglable en hauteur, ici sur la platine 26 montée mobile en translation sur le rail 27.

La tige porteuse filetée 52 et le mécanisme de guidage et d'entraînement 21 seront ainsi de préférence solidairement réglables en hauteur.

Plus globalement, le poste d'amenée 5, le dispositif de triage 40, et le mécanisme de guidage et d'entraînement 21 seront de préférence portés par un même support 25, et utiliseront ainsi un même référentiel machine commun, ce qui simplifiera la gestion des âmes 3 et permettra de gagner en précision.

De préférence, la tige porteuse filetée 52 peut être légèrement inclinée, par exemple de l'ordre de 5 degré à 20 degrés par rapport à l'horizontale, de sorte à présenter, du côté de la platine 26 et du rail 27, une première extrémité 52A captive, qui s'articule en rotation, motorisée, sur la platine 26, et, du côté opposé, à l'aplomb de l'organe de guidage 41 menant au mécanisme de guidage et d'entraînement 21, une seconde extrémité 52B libre, dont l'altitude est supérieure à l'altitude de la première extrémité 52A.

Avantageusement, une légère pente permet de faciliter la répartition des âmes 3 sur la tige porteuse filetée 52, et donc l'action de triage des âmes 3, sous l'action conjointe de la rotation de la tige porteuse filetée 52 et de la gravité.

Afin de limiter la flèche de la tige porteuse filetée 52 sous son propre poids et sous le poids des âmes 3, on prévoira de préférence une portée intermédiaire 55, comprenant par exemple deux galets 56, en rotation libre, et de préférence en forme de tonneau, afin de soutenir la tige porteuse 52 entre ses deux extrémités 52A, 52B, de préférence à une distance de la première extrémité captive 52A comprise entre 40% et 70% de la longueur totale de ladite tige porteuse filetée 52.

La portée intermédiaire 55 pourra être fixée sur le bras de potence 54, et s'insérer entre ledit bras de potence 54 et la tige porteuse 52, afin de combiner robustesse et compacité, sans gêner le stockage et l'acheminement des âmes 3.

Tel que cela est visible sur les figures 1 et 2, la tige porteuse 52 comporte de préférence un épaulement 57, de préférence situé sensiblement à la première extrémité 52A, et qui forme avantageusement une butée d'arrêt pour retenir sur ladite tige porteuse 52 les âmes 3 en attente d'acheminement, en empêchant notamment lesdites âmes 3 de glisser et de tomber.

La partie basse de la tige porteuse filetée 52 pourra ainsi avantageusement former une réserve, dans laquelle on pourra stocker un nombre défini d'âmes 3 en attente d'orientation en azimut et de tressage.

La tige porteuse filetée 52 présentera un filet dont le pas et la profondeur seront dimensionnés en fonction de la dimension de la section droite du ou des modèles d'âmes 3 que doit traiter l'installation 1, de manière à ce que chaque ondulation en creux dudit filet puisse recevoir une et une seule âme 3, et convoyer ladite âme 3 en la poussant progressivement jusqu'à l'extrémité libre 52B, d'où l'âme 3 est larguée dans l'organe de centrage 41.

Par ailleurs, on notera que le dispositif de détection 15 et/ou au moins une partie du dispositif de positionnement 20, notamment le mécanisme de guidage et d'entraînement 21, pourront être distincts du poste de tressage 7, et situés en amont dudit poste de tressage 7, entre le poste d'amenée 5 et le poste de tressage 7, et plus particulièrement entre le convoyeur 43 et le poste de tressage 7, tel que cela est illustré sur la figure 1.

En pareil cas, le dispositif de positionnement 20 comprendra un dispositif de transfert 60 permettant d'amener au poste de tressage 7, sans perte de référence, l'âme 3 qui aura été préalablement orientée convenablement en azimut au sein du mécanisme de guidage et d'entraînement 21.

En variante, on pourrait toutefois envisager que le dispositif de positionnement 20, et le cas échéant le dispositif de détection 15, soient situés sur le poste de tressage 7 lui-même, de manière à ce que l'orientation en azimut de l'âme se fasse directement sur ledit poste de tressage 7.

En tout état de cause, selon une caractéristique préférentielle qui peut constituer une invention en tant que telle, et tel que cela est illustré sur la figure 1, l'installation 1 peut comprendre un dispositif de transfert 60 à potences multiples, comprenant un mât 61 commun qui est mobile d'une part en rotation autour d'un axe vertical dit « axe de lacet » Z61, et d'autre part en translation verticale le long dudit axe de lacet Z61, et qui est pourvu d'au moins un premier bras 62 et un second bras 63, fixés audit mât 61 et agencés de telle sorte que, dans un même mouvement du mât 61 commun, le premier bras 62 opère le transfert d'une première âme 3 entourée de son au moins un fil de tresse 4, par exemple une tringle semi-finie 2_part, depuis le poste de tressage 7 jusqu'au poste de manchonnage 10 ou jusqu'à un poste de stockage 13 qui précède le poste de manchonnage 10, tandis que, simultanément, le second bras 63 opère le transfert d'une seconde âme 3 depuis le poste d'amenée 5, après détection de l'élément de repérage 16 et positionnement de l'âme 3 en azimut, vers le poste de tressage 7.

Avantageusement, un tel transfert groupé et synchronisé entre plusieurs, ici au moins trois, postes successifs, permet de réaliser des économies de structure (et donc de coût et d'encombrement), de motorisation, et d'énergie. On favorise également ainsi une cadence de production stable et élevée.

En outre, cette communauté de mouvement permet de conserver, entre les postes, les références de positionnement qui sont prises dans le référentiel attaché aux postes concernés, et plus particulièrement qui sont prises dans le référentiel attaché au bâti 11 de l'installation 1.

Le sous-ensemble comprenant le mât 61 et le premier bras 62 forme avantageusement une première potence, chargée des transports entre le poste de tressage 7 et le poste aval (poste de stockage tampon 13 ou directement poste de manchonnage 10), tandis que le sous-ensemble comprenant ce même mât 61 et le second bras 63 forme avantageusement une seconde potence, chargée des transports entre le poste d'amenée 5 et le poste de tressage 7, et plus particulièrement entre le mécanisme de guidage et d'entraînement 21 et le poste de tressage 7.

De préférence, le premier bras 62 et le second bras 63 sont décalés angulairement en lacet autour de l'axe Z61 du mât 61, par exemple d'une valeur comprise entre 60 degrés et 150 degrés, de préférence voisine de ou égale à 90 degrés, ce qui contribue notamment à la compacité de l'installation.

De préférence, les premier et second bras 62, 63 pourront comporter des pinces 64 de préhension agencées pour saisir les âmes 3 ou, respectivement, les âmes 3 garnies de leur fil de tresse 4 (en particulier les tringles semi-finies 2_part).

De préférence, les pinces assureront la préhension des âmes 3, respectivement des âmes 3 garnies de leur fil de tresse 4, dans une partie haute de celles-ci, sensiblement à l'opposé du point bas 3_low par rapport à l'axe principal Z3. De la sorte, l'âme 3 est manipulée par la pince 64 un peu comme s'il s'agissait d'une anse de panier.

Les pinces 64 assureront une préhension stable et ferme, de préférence au niveau d'un tronçon de préhension qui est situé au point haut 3_top de l'âme 3, à la verticale du point bas 3_low, et donc par rapport auquel l'âme est naturellement équilibrée du fait de sa géométrie et de son propre poids.

Ainsi, avantageusement, ni la préhension, ni le transfert ne modifient l'orientation en azimut conférée à l'âme 3 par le système de contrôle en azimut 14.

Tel que cela est illustré par des flèches sur la figure 1, le mouvement de transfert de l'âme 3 depuis le poste d'amenée 5 jusqu'au poste de tressage 7, et plus particulièrement depuis le mécanisme de guidage et d'entraînement 21 jusqu'au poste de tressage 7, pourra s'exécuter comme suit, de préférence par rapport au même bâti 11 que celui par rapport auquel s'effectuent les mouvements de réglage en hauteur du support 25 :
- l'âme 3 ayant été préalablement orientée en azimut, le second bras 63 est placé au-dessus du mécanisme de guidage et d'entraînement 21, et plus particulièrement au-dessus de l'espace libre compris entre les deux organes de centrage 41 ;
- l'âme 3 est libérée du mécanisme de guidage et d'entraînement 21, de préférence en écartant le contre-galet 28 du galet d'entraînement 23 ;
- la pince 64 dudit second bras 63 s'ouvre, et le mât 61 descend pour amener le bras 63, et plus particulièrement la pince, à hauteur du tronçon de préhension de l'âme, ici le point haut 3_top de l'âme 3 ;
- la pince 64 se referme sur le tronçon de préhension de l'âme 3 ;
- le mât 61 remonte, entraînant le second bras 63 portant l'âme 3 ;
- le mât 61 pivote en lacet, ici d'un quart de tour dans le sens anti-horaire sur la figure 1, de sorte à amener le second bras 63 à l'aplomb du poste de tressage 7 ;
- le mât 61 descend, jusqu'à ce que l'âme prenne place sur le poste de tressage 7, où l'âme 3 est alors verrouillée par une mise en tension mécanique dans le carrousel 7A.

On notera que, avantageusement, les manipulations de l'âme 3 par le dispositif de transfert 60 n'altèrent pas l'orientation en azimut de l'âme 3, entre l'opération de contrôle en azimut et l'opération de tressage, ce qui évite toute perte de référence.

On notera également que, de préférence, on pourra prévoir un dispositif de libération 70 qui permet de libérer l'âme 3 du mécanisme de guidage et d'entraînement 21 une fois que ladite âme a été positionnée convenablement en azimut, sans modifier ni perturber ladite orientation en azimut.

De préférence, ledit dispositif de libération 70 sera agencé de sorte à pouvoir, sur commande, manoeuvre le contre-galet 28 en retrait, selon la direction de recul F28, de sorte à éloigner le contre-galet 28 du galet d'entraînement 23 et ainsi libérer âme 3.

Plus préférentiellement, ledit dispositif de libération 70 pourra par exemple comprendre à cet effet, tel que cela est illustré sur les figures 3 et 7, un vérin pousseur 71 qui agit sur un patin 72 afin de lever le levier 31, et ainsi faire basculer le contre-galet 28 selon la direction de recul F28.

Les mouvements opérés par la première potence, comprenant le mât 61 et le premier bras 62 pourvu de sa pince 64, pour opérer le transfert de la tringle semi-finie 2_part depuis le poste de tressage 7 vers le poste de stockage tampon 13 ou le poste de manchonnage 10, se déduiront *mutatis mutandis* des mouvements de transfert décrits ci-dessus.

L'invention concerne par ailleurs bien entendu un procédé permettant de réaliser l'une ou l'autre quelconque des opérations ou combinaisons d'opération décrites dans ce qui précède.

L'invention peut donc concerner, de manière très générale, un procédé de fabrication de tringle 2, au cours duquel on réalise une étape de contrôle en azimut afin de positionner intentionnellement la jonction de tresse 8 à une distance de séparation minimale d_azim donnée de la jonction d'âme 6, de préférence à une distance de séparation d_azim égale ou supérieure à 10 degrés, et/ou égale ou supérieure à 40 mm de longueur d'arc.

Plus particulièrement, l'invention concerne un procédé de fabrication d'une tringle 2 destinée au renfort d'un bandage, tel qu'un bandage pneumatique, ledit procédé comprenant :
- une étape (a) d'approvisionnement d'une âme au cours de laquelle on approvisionne une âme 3 qui forme un anneau ayant un axe principal Z3, ladite âme 3 étant à cet effet maintenue fermée sur elle-même au niveau d'une jonction dite «jonction d'âme » 6 qui occupe, en azimut autour dudit axe principal Z3, un premier secteur angulaire S6,
- une étape (d) de tressage au cours de laquelle on enroule au moins un fil, dit « fil de tresse » 4, en hélice autour de l'âme 3, sur au moins un tour autour de l'axe principal Z3,
- une étape (e) de réalisation d'une jonction de tresse 8, au cours de laquelle on réalise une jonction, de préférence au moyen d'un manchon de tresse 9 serti, entre un premier tronçon d'extrémité du fil de tresse 4A et un second tronçon d'extrémité du fil de tresse 4B afin de maintenir ledit fil de tresse 4 fermé sur lui-même autour dudit axe principal Z3, ladite jonction de tresse occupant, en azimut autour de l'axe principal Z3, un second secteur angulaire S8.

Selon l'invention, ledit procédé comprend :
- une étape (b) de détection au cours de laquelle on recherche et l'on détecte sur l'âme 3 un élément de repérage 16 par rapport auquel la position du premier secteur angulaire S6 est connue,
- une étape (c) de positionnement au cours de laquelle on prend en considération ledit élément de repérage 16 pour adapter l'orientation en azimut de ladite âme 3, par référence audit élément de repérage 16, lors de la mise en oeuvre de l'étape (d) de tressage, de telle manière que à l'issue des étapes (d) de tressage puis (e) de réalisation de jonction de tresse 8, le second secteur angulaire S8 occupé par la jonction de tresse 8 ne chevauche pas le premier secteur angulaire S6 occupé par la jonction d'âme 6.

Bien entendu, l'invention n'est nullement limitée aux seules variantes de réalisation décrites dans ce qui précède, l'homme du métier étant notamment à même d'isoler ou de combiner librement entre elles l'une ou l'autre des caractéristiques susmentionnées, ou de leur substituer des équivalents.

## Revendications

1. Installation (1) de préparation de tringles (2) destinées au renfort d'un bandage, tel qu'un bandage pneumatique, ladite installation comprenant :
- un poste d'amenée (5), agencé pour amener une âme (3) qui forme un anneau ayant un axe principal (Z3), ladite âme étant à cet effet maintenue fermée sur elle-même au niveau d'une jonction dite «jonction d'âme » (6) qui occupe, en azimut autour dudit axe principal (Z3), un premier secteur angulaire (S6),
- un poste de tressage (7), agencé pour entrelacer au moins un fil, dit « fil de tresse » (4), en hélice autour de l'âme (3), sur au moins un tour autour de l'axe principal (Z3), en prévoyant, en azimut autour de l'axe principal (Z3), un second secteur angulaire (S8) qui est destiné à accueillir une jonction, dite «jonction de tresse » (8), entre un premier tronçon d'extrémité (4A) du fil de tresse et un second tronçon d'extrémité (4B) du fil de tresse afin de maintenir ledit fil de tresse (4) fermé sur lui-même autour dudit axe principal (Z3),
ladite installation étant **caractérisée en ce qu'**elle comporte un système de contrôle en azimut (14) qui comprend :
- un dispositif de détection (15) agencé pour détecter sur l'âme (3) un élément de repérage (16) par rapport auquel la position du premier secteur angulaire (S6) est connue,
- et un dispositif de positionnement (20) qui permet d'adapter l'orientation en azimut de ladite âme (3), par référence audit élément de repérage (16), pour la mise en oeuvre de ladite âme (3) sur le poste de tressage (7), de telle manière que le second secteur angulaire (S8) prévu par le poste de tressage (7) pour la jonction de tresse (8) ne chevauche pas le premier secteur angulaire (S6) occupé par la jonction d'âme (6).

2. Installation selon la revendication 1 **caractérisée en ce que** le système de contrôle en azimut (14) est agencé pour placer de manière reproductible le second secteur angulaire (S8), prévu pour la jonction de tresse (8), à une distance azimutale minimale du premier secteur angulaire occupé par la jonction d'âme, dite « distance de séparation azimutale » (d_azim), qui est égale ou supérieure à 10 degrés, et/ou égale ou supérieure à 40 mm de longueur d'arc.

3. Installation selon la revendication 1 ou 2 **caractérisée en ce que** le dispositif de détection (15) comprend un capteur de ressaut (17) agencé pour balayer la surface de l'âme (3) afin de détecter un ressaut (16_offset) qui est formé sur la surface de l'âme et qui constitue l'élément de repérage (16), tel qu'un bourrelet de soudure présent au niveau de la jonction d'âme (6).

4. Installation selon l'une des revendications précédentes **caractérisée en ce que** le dispositif de détection (15) comprend un capteur magnétique (18) agencé pour détecter sur l'âme (3) un élément de repérage (16) formé par un marquage magnétique (16_magn), et/ou un capteur optique agencé pour détecter sur l'âme (3) un élément de repérage (16) formé par un marquage optique.

5. Installation selon l'une des revendications précédentes **caractérisée en ce qu'**elle comporte un mécanisme de guidage et d'entraînement (21) qui est agencé pour guider et entraîner l'âme (3) en rotation azimutale autour de son axe principal (Z3), selon un chemin dit « chemin d'âme » (T21) défini par ledit mécanisme de guidage et d'entraînement (21), de sorte à pouvoir tout d'abord faire défiler l'âme (3) jusqu'à ce que le dispositif de détection (15) détecte l'élément de repérage (16), puis ensuite ajuster la position azimutale de ladite âme (3) par rapport audit élément de repérage (16), selon une configuration prédéterminée, telle que définie par le dispositif de positionnement (20).

6. Installation selon les revendications 3 et 5 **caractérisée en ce que** le mécanisme de guidage et d'entraînement (21) comprend au moins un galet d'entraînement (23), de préférence à axe de rotation (Z23) vertical, qui vient en appui contre l'âme (3) pour entraîner ladite âme par friction, ainsi que, en vis-à-vis dudit au moins un galet d'entraînement (23), un contre-galet (28) qui définit, avec le galet d'entraînement (23), un interstice (29) à travers lequel passe le chemin d'âme (T21), ledit contre-galet (28) étant mobile, en translation ou, de préférence, en basculement, selon une direction dite « direction de recul » (F28) transverse au chemin d'âme (T21), et rappelé contre l'âme (3) par un organe de rappel (30), du genre ressort ou contrepoids, de telle sorte que ledit contre-galet (28) forme un palpeur mécanique d'un capteur de ressaut (17), apte à détecter le ressaut de l'âme (16_offset) qui constitue l'élément de repérage (16).

7. Installation selon la revendication 5 ou 6 **caractérisée en ce que** le mécanisme de guidage et d'entraînement (21) est agencé de sorte que le chemin d'âme (T21) qu'il définit est sensiblement contenu dans un plan vertical, ledit mécanisme de guidage et d'entraînement (21) comprenant à cet effet un ou plusieurs organes porteurs (24) agencés pour soutenir verticalement l'âme (3), tels que des diabolos, ainsi qu'au moins un organe d'entraînement (23) agencé pour agir sur l'âme (3) afin d'entraîner ladite âme en déplacement le long du chemin d'âme (T21), tel qu'un galet d'entraînement par friction (23).

8. Installation selon la revendication 7 **caractérisée en ce que** le mécanisme de guidage et d'entraînement (21) est porté par un support (25) réglable en hauteur, du genre potence, qui permet d'ajuster, de préférence automatiquement, l'altitude dudit mécanisme de guidage et d'entraînement (21) en fonction du diamètre annulaire (D3) de l'âme (3), et ainsi de positionner dans une plage d'altitude prédéfinie, de manière reproductible d'une âme (3) à l'autre, le point bas (3_low) de l'âme (3) qui est présente à l'instant considéré au sein dudit mécanisme de guidage et d'entraînement (21).

9. Installation selon l'une des revendications 5 à 8 **caractérisée en ce que** le poste d'amenée (5) comprend un dispositif de triage (40) qui comporte d'une part un organe de centrage (41) pourvu d'au moins une rampe de guidage (42) qui est agencée pour recevoir une âme (3) et permettre à ladite âme de glisser, par gravité, le long de ladite rampe de guidage (42), jusqu'au mécanisme de guidage et d'entraînement (21), et d'autre part un convoyeur (43), par exemple un convoyeur à vis sans fin (44), agencé pour amener et lâcher des âmes (3) une par une à l'aplomb de l'organe de centrage (41).

10. Installation selon la revendication 9 **caractérisée en ce que** le dispositif de triage (40) comporte un compteur d'âme (50), comprenant par exemple un doigt de comptage basculant (51), qui est conçu pour détecter le passage effectif d'une âme (3) entre le convoyeur (43) et le mécanisme de guidage et d'entraînement (21).

11. Installation selon l'une des revendications précédentes **caractérisée en ce que** le poste d'amenée (5) comporte un convoyeur (43) à vis sans fin (44), comprenant une tige porteuse filetée (52) rotative qui est agencée de sorte à pouvoir i) recevoir une pluralité d'âmes (3), enfilées sur ladite tige porteuse filetée (52), ii) répartir lesdites âmes (3) le long de ladite tige porteuse filetée (52) à raison d'une âme (3) au plus par pas de vis, et iii) convoyer lesdites âmes (3) en translation le long de ladite tige porteuse filetée (52) lorsque ladite tige porteuse (52) est mise en rotation.

12. Installation selon l'une des revendications précédentes **caractérisée en ce qu'**elle comporte un poste de manchonnage (10), agencé pour réunir et fixer l'un à l'autre le premier tronçon d'extrémité (4A) du fil de tresse et le second tronçon d'extrémité (4B) du fil de tresse au moyen d'un manchon, dit « manchon de tresse » (9), qui est serti, dans le second secteur angulaire (S8).

13. Installation selon la revendication 12 **caractérisée en ce qu'**elle comprend un dispositif de transfert (60) à potences multiples, comprenant un mât (61) commun qui est mobile d'une part en rotation autour d'un axe vertical dit « axe de lacet » (Z61), et d'autre part en translation verticale le long dudit axe de lacet (Z61), et qui est pourvu d'au moins un premier bras (62) et un second bras (63), fixés audit mât (61) et agencés de telle sorte que, dans un même mouvement du mât (61) commun, le premier bras (62) opère le transfert d'une première âme (3) entourée de son au moins un fil de tresse (4) depuis le poste de tressage (7) jusqu'au poste de manchonnage (10) ou jusqu'à un poste de stockage (13) qui précède le poste de manchonnage (10), tandis que, simultanément, le second bras (63) opère le transfert d'une seconde âme (3) depuis le poste d'amenée (5), après détection de l'élément de repérage (16) et positionnement de l'âme (3) en azimut, vers le poste de tressage (7).

14. Procédé de fabrication d'une tringle (2) destinée au renfort d'un bandage, tel qu'un bandage pneumatique, ledit procédé comprenant :
- une étape (a) d'approvisionnement d'une âme (3) au cours de laquelle on approvisionne une âme (3) qui forme un anneau ayant un axe principal (Z3), ladite âme étant à cet effet maintenue fermée sur elle-même au niveau d'une jonction dite «jonction d'âme » (6) qui occupe, en azimut autour dudit axe principal (Z3), un premier secteur angulaire (S6),
- une étape (d) de tressage au cours de laquelle on enroule au moins un fil, dit « fil de tresse » (4), en hélice autour de l'âme (3), sur au moins un tour autour de l'axe principal (Z3),
- une étape (e) de réalisation d'une jonction de tresse (8), au cours de laquelle on réalise une jonction, de préférence au moyen d'un manchon de tresse (9) serti, entre un premier tronçon d'extrémité du fil de tresse (4A) et un second tronçon d'extrémité du fil de tresse (4B) afin de maintenir ledit fil de tresse fermé sur lui-même autour dudit axe principal (Z3), ladite jonction de tresse (8) occupant, en azimut autour de l'axe principal (Z3), un second secteur angulaire (S8),
ledit procédé étant **caractérisé en ce qu'**il comprend :
- une étape (b) de détection au cours de laquelle on recherche et l'on détecte sur l'âme (3) un élément de repérage (16) par rapport auquel la position du premier secteur angulaire (S6) est connue,
- une étape (c) de positionnement au cours de laquelle on prend en considération ledit élément de repérage (16) pour adapter l'orientation en azimut de ladite âme (3), par référence audit élément de repérage (16), lors de la mise en oeuvre de l'étape (d) de tressage, de telle manière que à l'issue des étapes (d) de tressage puis (e) de réalisation de jonction de tresse, le second secteur angulaire (S8) occupé par la jonction de tresse (8) ne chevauche pas le premier secteur angulaire (S6) occupé par la jonction d'âme (6).

## Patentansprüche

1. Anlage (1) zur Vorbereitung von Wulstkernen (2), die zur Verstärkung eines Reifens, beispielsweise eines Luftreifens, bestimmt sind, wobei die Anlage Folgendes umfasst:
- eine Zuführstation (5), die dazu angeordnet ist, einen Kern (3) zuzuführen, der einen Ring mit einer Hauptachse (Z3) bildet, wobei der Kern zu diesem Zweck im Bereich einer als "Kernverbindung" (6) bezeichneten Verbindung, die im Azimut um die Hauptachse (Z3) einen ersten Winkelsektor (S6) einnimmt, in sich geschlossen gehalten wird,
- eine Flechtstation (7), die dazu angeordnet ist, mindestens einen als "Flechtdraht" (4) bezeichneten Draht in Schraubenform um den Kern (3) herum über mindestens eine Umdrehung um die Hauptachse (Z3) zu flechten, wobei im Azimut um die Hauptachse (Z3) ein zweiter Winkelsektor (S8) vorgesehen ist, der dazu bestimmt ist, eine als "Flechtverbindung" (8) bezeichnete Verbindung zwischen einem ersten Endabschnitt (4A) des Flechtdrahts und einem zweiten Endabschnitt (4B) des Flechtdrahts aufzunehmen, um den Flechtdraht (4) um die Hauptachse (Z3) in sich geschlossen zu halten,
wobei die Anlage **dadurch gekennzeichnet ist, dass** sie ein Azimut-Kontrollsystem (14) aufweist, das Folgendes umfasst:
- eine Detektionsvorrichtung (15), die dazu angeordnet ist, ein Kennzeichnungselement (16) am Kern (3), in Bezug auf welches die Position des ersten Winkelsektors (S6) bekannt ist, zu detektieren,
- und eine Positionierungsvorrichtung (20), die es ermöglicht, die Azimutausrichtung des Kerns (3) in Bezug auf das Kennzeichnungselement (16) für die Verarbeitung des Kerns (3) an der Flechtstation (7) so anzupassen, dass der zweite Winkelsektor (S8), der von der Flechtstation (7) für die Flechtverbindung (8) vorgesehen ist, nicht den ersten Winkelsektor (S6), der von der Kernverbindung (6) eingenommen wird, überlappt.

2. Anlage nach Anspruch 1, **dadurch gekennzeichnet, dass** das Azimut-Kontrollsystem (14) dazu angeordnet ist, den für die Flechtverbindung (8) vorgesehenen zweiten Winkelsektor (S8) in reproduzierbarer Weise in einem als "azimutaler Trennabstand" bezeichneten azimutalen Mindestabstand des ersten Winkelsektors (d_azim) anzuordnen, der von der Kernverbindung eingenommen wird und der 10 Grad oder mehr beträgt und/oder eine Bogenlänge von 40 mm oder mehr aufweist.

3. Anlage nach Anspruch 1 oder 2, **dadurch gekennzeichnet, dass** die Detektionsvorrichtung (15) einen Vorsprungssensor (17) zum Abtasten der Oberfläche des Kerns (3) umfasst, um einen Vorsprung (16_offset) zu detektieren, der an der Oberfläche des Kerns ausgebildet ist und der das Kennzeichnungselement (16) bildet, beispielsweise eine Schweißwulst, die im Bereich der Kernverbindung (6) vorhanden ist.

4. Anlage nach einem der vorangehenden Ansprüche **dadurch gekennzeichnet, dass** die Detektionsvorrichtung (15) einen magnetischen Sensor (18) zum Detektieren eines durch eine magnetische Markierung (16_magn) gebildeten Kennzeichnungselements (16) am Kern (3) und/oder einen optischen Sensor zum Detektieren eines durch eine optische Markierung gebildeten Kennzeichnungselements (16) am Kern (3) umfasst.

5. Anlage nach einem der vorangehenden Ansprüche **dadurch gekennzeichnet, dass** sie einen Führungs- und Antriebsmechanismus (21) zum Führen und Antreiben des Kerns (3) in azimutaler Drehung um seine Hauptachse (Z3) entlang einer als "Kernbahn" bezeichneten Bahn (T21), die durch den Führungs- und Antriebsmechanismus (21) definiert ist, umfasst, um den Kern (3) zunächst so weit bewegen zu können, bis die Detektionsvorrichtung (15) das Kennzeichnungselement (16) detektiert, und anschließend die azimutale Position des Kerns (3) in Bezug auf das Kennzeichnungselement (16) nach einer vorbestimmten Konfiguration, die durch die Positionierungsvorrichtung (20) definiert wird, einstellen zu können.

6. Anlage nach Anspruch 3 und 5, **dadurch gekennzeichnet, dass** der Führungs- und Antriebsmechanismus (21) mindestens eine Antriebsrolle (23), vorzugsweise mit vertikaler Drehachse (Z23), umfasst, die am Kern (3) zur Anlage kommt, um den Kern durch Reibung anzutreiben, sowie eine Gegenrolle (28) gegenüber der mindestens einen Antriebsrolle (23), die mit der Antriebsrolle (23) einen Zwischenraum (29) definiert, durch den die Kernbahn (T21) verläuft, wobei die Gegenrolle (28) translatorisch oder vorzugsweise kippend in einer als "Rückzugsrichtung" bezeichneten Richtung (F28), die quer zur Kernbahn (T21) verläuft, bewegbar ist und durch ein Vorspannorgan (30) von der Art einer Feder oder eines Gegengewichts gegen den Kern (3) vorgespannt ist, sodass die Gegenrolle (28) einen mechanischen Taster eines Vorsprungssensors (17) bildet, der den Vorsprung des Kerns (16_offset), der das Kennzeichnungselement (16) bildet, detektieren kann.

7. Anlage nach Anspruch 5 oder 6, **dadurch gekennzeichnet, dass** der Führungs- und Antriebsmechanismus (21) so angeordnet ist, dass die von ihm definierte Kernbahn (T21) im Wesentlichen in einer vertikalen Ebene enthalten ist, wobei der Führungs- und Antriebsmechanismus (21) zu diesem Zweck ein oder mehrere Tragorgane (24) umfasst, die dazu angeordnet sind, den Kern (3) vertikal zu halten, wie beispielsweise Diabolos, sowie mindestens ein Antriebsorgan (23), das dazu angeordnet ist, auf den Kern (3) einzuwirken, um den Kern entlang der Kernbahn (T21) zu bewegen, wie etwa eine Reibungsantriebsrolle (23).

8. Anlage nach Anspruch 7, **dadurch gekennzeichnet, dass** der Führungs- und Antriebsmechanismus (21) durch einen höhenverstellbaren Träger (25) von der Art eines Auslegers getragen wird, der es ermöglicht, die Höhe des Führungs- und Antriebsmechanismus (21) in Abhängigkeit vom Ringdurchmesser (D3) des Kern (3) vorzugsweise automatisch einzustellen und somit den Tiefpunkt (3_low) des Kerns (3), der sich zum betreffenden Zeitpunkt innerhalb des Führungs- und Antriebsmechanismus (21) befindet, in einem vordefinierten Höhenbereich in reproduzierbarer Weise von einem Kern (3) zum anderen zu positionieren.

9. Anlage nach einem der Ansprüche 5 bis 8, **dadurch gekennzeichnet, dass** die Zuführstation (5) eine Sortiervorrichtung (40) umfasst, die einerseits ein Zentrierorgan (41) aufweist, das mit mindestens einer Führungsrampe (42) versehen ist, die dazu angeordnet ist, einen Kern (3) aufzunehmen und ein Gleiten des Kerns durch die Schwerkraft entlang der Führungsrampe (42) bis zum Führungs- und Antriebsmechanismus (21) zu ermöglichen, und andererseits einen Förderer (43), beispielsweise einen Schneckenförderer (44), der dazu angeordnet ist, Kerne (3) einzeln lotrecht zum Zentrierorgan (41) zuzuführen und fallen zu lassen.

10. Anlage nach Anspruch 9, **dadurch gekennzeichnet, dass** die Sortiervorrichtung (40) einen Kernzähler (50) aufweist, der beispielsweise einen kippbaren Zählfinger (51) umfasst, der dazu ausgelegt ist, den tatsächlichen Durchgang eines Kerns (3) zwischen dem Förderer (43) und dem Führungs- und Antriebsmechanismus (21) zu detektieren.

11. Anlage nach einem der vorangehenden Ansprüche, **dadurch gekennzeichnet, dass** die Zuführstation (5) einen Förderer (43) mit einer Schnecke (44) aufweist, der eine drehbare Gewindeträgerstange (52) aufweist, die so angeordnet ist, dass sie i) mehrere auf der Gewindeträgerstange (52) aufgereihte Kerne (3) aufnehmen kann, ii) die Kerne (3) entlang der Gewindeträgerstange (52) mit höchstens einem Kern (3) pro Gewindegang verteilen kann und iii) die Kerne (3) entlang der Gewindeträgerstange (52) translatorisch befördern kann, wenn die Trägerstange (52) gedreht wird.

12. Anlage nach einem der vorangehenden Ansprüche, **dadurch gekennzeichnet, dass** sie eine Hülsenstation (10) aufweist, die dazu angeordnet ist, den ersten Endabschnitt (4A) des Flechtdrahts und den zweiten Endabschnitt (4B) des Flechtdrahts mit Hilfe einer als "Flechthülse" bezeichneten Hülse (9), die gecrimpt wird, im zweiten Winkelsektor (S8) miteinander zu verbinden und aneinander zu befestigen.

13. Anlage nach Anspruch 12, **dadurch gekennzeichnet, dass** sie eine Transfervorrichtung (60) mit mehreren Auslegern umfasst, die einen gemeinsamen Mast (61) umfassen, der einerseits um eine als "Gierachse" bezeichnete vertikale Achse (Z61) drehbar ist und andererseits entlang der Gierachse (Z61) vertikal verschiebbar ist und der mit mindestens einem ersten Arm (62) und einem zweiten Arm (63) versehen ist, die am Mast (61) befestigt und so angeordnet sind, dass bei einer gleichen Bewegung des gemeinsamen Masts (61) der erste Arm (62) den Transfer eines ersten Kerns (3), der von seinem mindestens einen Flechtdraht (4) umgeben ist, von der Flechtstation (7) zur Hülsenstation (10) oder zu einer vor der Hülsenstation (10) liegenden Lagerstation (13) bewirkt, während gleichzeitig der zweite Arm (63) nach dem Detektieren des Kennzeichnungselements (16) und dem Positionieren des Kerns (3) im Azimut den Transfer eines zweiten Kerns (3) von der Zuführstation (5) zur Flechtstation (7) bewirkt.

14. Verfahren zur Herstellung eines Wulstkerns (2), der zur Verstärkung eines Reifens, beispielsweise eines Luftreifens, bestimmt ist, wobei das Verfahren Folgendes umfasst:
- einen Schritt (a) des Bereitstellens eines Kerns (3), bei dem ein Kern (3) bereitgestellt wird, der einen Ring mit einer Hauptachse (Z3) bildet, wobei der Kern zu diesem Zweck im Bereich einer als "Kernverbindung" bezeichneten Verbindung (6), die im Azimut um die Hauptachse (Z3) einen ersten Winkelsektor (S6) einnimmt, in sich geschlossen gehalten wird,
- einen Flechtschritt (d), bei dem mindestens ein als "Flechtdraht" bezeichneter Draht (4) in Schraubenform um den Kern (3) herum über mindestens eine Umdrehung um die Hauptachse (Z3) gewickelt wird,
- einen Schritt (e) der Herstellung einer Flechtverbindung (8), bei dem eine Verbindung vorzugsweise mit Hilfe einer gecrimpten Flechthülse (9) zwischen einem ersten Endabschnitt des Flechtdrahts (4A) und einem zweiten Endabschnitt des Flechtdrahts (4B) hergestellt wird, um den Flechtdraht um die Hauptachse (Z3) in sich geschlossen zu halten, wobei die Flechtverbindung (8) im Azimut um die Hauptachse (Z3) einen zweiten Winkelsektor (S8) einnimmt,
wobei das Verfahren **dadurch gekennzeichnet ist, dass** es Folgendes umfasst:
- einen Detektionsschritt (b), bei dem am Kern (3) ein Kennzeichnungselement (16) gesucht und detektiert wird, in Bezug auf welches der erste Winkelsektor (S6) bekannt ist,
- einen Positionierungsschritt (c), bei dem das Kennzeichnungselement (16) berücksichtigt wird, um die Azimutausrichtung des Kerns (3) in Bezug auf das Kennzeichnungselement (16) bei der Durchführung des Flechtschritts (d) anzupassen, sodass am Ende des Flechtschritts (d) und dann des Schritts (e) zur Herstellung der Flechtverbindung der zweite Winkelsektor (S8), der von der Flechtverbindung (8) eingenommen wird, nicht den ersten Winkelsektor (S6), der von der Kernverbindung (6) eingenommen wird, überlappt.

## Claims

1. Installation (1) for preparing bead wires (2) intended for the reinforcement of a tyre, such as a pneumatic tyre, said installation comprising:
- a fetching station (5), arranged to fetch a core (3) which forms a ring having a main axis (Z3), said core being, to this end, kept closed on itself at a join called "core join" (6) which occupies, in azimuth about said main axis (Z3), a first angular sector (S6),
- a braiding station (7), arranged to interleave at least one wire, called "braid wire" (4), helically about the core (3), over at least one turn about the main axis (Z3), by providing, in azimuth about the main axis (Z3), a second angular sector (S8) which is intended to accommodate a join, called "braid join" (8), between a first end section (4A) of the braid wire and a second end section (4B) of the braid wire in order to keep said braid wire (4) closed on itself about said main axis (Z3),
said installation being **characterized in that** it comprises an azimuth checking system (14) which comprises:
- a detection device (15) arranged to detect on the core (3) a registration element (16) with respect to which the position of the first angular sector (S6) is known,
- and a positioning device (20) which makes it possible to adapt the azimuthal orientation of said core (3), with reference to said registration element (16), for the implementation of said core (3) on the braiding station (7), so that the second angular sector (S8) provided by the braiding station (7) for the braid join (8) does not overlap the first angular sector (S6) occupied by the core join (6).

2. Installation according to Claim 1, **characterized in that** the azimuth checking system (14) is arranged to reproducibly place the second angular sector (S8), provided for the braid join (8), at a minimal azimuthal distance from the first angular sector occupied by the core join, called "azimuthal separation distance" (d_azim), which is equal to or greater than 10 degrees, and/or equal to or greater than 40 mm of arc length.

3. Installation according to Claim 1 or 2, **characterized in that** the detection device (15) comprises an offset sensor (17) arranged to scan the surface of the core (3) in order to detect an offset (16_offset) which is formed on the surface of the core and which constitutes the registration element (16), such as a weld bead present at the core join (6).

4. Installation according to one of the preceding claims, **characterized in that** the detection device (15) comprises a magnetic sensor (18) arranged to detect on the core (3) a registration element (16) formed by a magnetic marking (16_magn), and/or an optical sensor arranged to detect on the core (3) a registration element (16) formed by an optical marking.

5. Installation according to one of the preceding claims, **characterized in that** it comprises a guiding and driving mechanism (21) which is arranged to guide and drive the core (3) in azimuthal rotation about its main axis (Z3), along a path called "core path" (T21) defined by said guiding and driving mechanism (21), so as to be able first of all to run the core (3) until the detection device (15) detects the registration element (16), then adjust the azimuthal position of said core (3) with respect to said registration element (16), according to a predetermined configuration, as defined by the positioning device (20).

6. Installation according to Claims 3 and 5, **characterized in that** the guiding and driving mechanism (21) comprises at least one drive roller (23), preferably with vertical axis of rotation (Z23), which comes to bear against the core (3) to drive said core by friction, and, facing said at least one drive roller (23), a counter-roller (28) which defines, with the drive roller (23), an interstice (29) through which the core path (T21) passes, said counter-roller (28) being movable, by translation or, preferably, by swivelling, in a direction called "direction of retraction" (F28) that is transverse to the core path (T21), and returned against the core (3) by a return member (30), of the spring or counterweight kind, such that said counter-roller (28) forms a mechanical feeler of an offset sensor (17), capable of detecting the offset of the core (16_offset) which constitutes the registration element (16).

7. Installation according to Claim 5 or 6, **characterized in that** the guiding and driving mechanism (21) is arranged so that the core path (T21) that it defines is substantially contained in a vertical plane, said guiding and driving mechanism (21) comprising, to this end, one or more supporting members (24) arranged to vertically support the core (3), such as bobbins, and at least one driving member (23) arranged to act on the core (3) in order to drive said core in displacement along the core path (T21), such as a friction drive roller (23).

8. Installation according to Claim 7, **characterized in that** the guiding and driving mechanism (21) is borne by a support (25) that can be adjusted in height, of the boom kind, which makes it possible to adjust, preferably automatically, the altitude of said guiding and driving mechanism (21) according to the annular diameter (D3) of the core (3), and thus position, within a predefined altitude range, reproducibly from one core (3) to the next, the low point (3_low) of the core (3) which is present at the instant considered within said guiding and driving mechanism (21).

9. Installation according to one of Claims 5 to 8, **characterized in that** the fetching station (5) comprises a sorting device (40) which comprises, on the one hand, a centring member (41) provided with at least one guiding ramp (42) which is arranged to receive a core (3) and allow said core to slip, by gravity, along said guiding ramp (42), to the guiding and driving mechanism (21), and, on the other hand, a conveyor (43), for example a screw conveyor with worm screw (44), arranged to fetch and release the cores (3) one by one vertically above the centring member (41).

10. Installation according to Claim 9, **characterized in that** the sorting device (40) comprises a core counter (50), comprising, for example, a swivelling counting finger (51), which core counter (50) is designed to detect the actual passage of one core (3) between the conveyor (43) and the guiding and driving mechanism (21).

11. Installation according to one of the preceding claims, **characterized in that** the fetching station (5) comprises a screw conveyor (43) with worm screw (44), comprising a rotary threaded supporting rod (52) which is arranged so as to be able to i) receive a plurality of cores (3), threaded onto said threaded supporting rod (52), ii) distribute said cores (3) along said threaded supporting rod (52) at one core (3) at most per screw pitch, and iii) convey said cores (3) in translation along said threaded supporting rod (52) when said supporting rod (52) is rotated.

12. Installation according to one of the preceding claims, **characterized in that** it comprises a sleeve-coupling station (10), arranged to join and fix to one another the first end section (4A) of the braid wire and the second end section (4B) of the braid wire by means of a sleeve, called "braid sleeve" (9), which is crimped, in the second angular sector (S8).

13. Installation according to Claim 12, **characterized in that** it comprises a transfer device (60) with multiple booms, comprising a common mast (61) which is movable, on the one hand, in rotation about a vertical axis called "yaw axis" (Z61), and, on the other hand, in vertical translation along said yaw axis (Z61), and which is provided with at least a first arm (62) and a second arm (63), fixed to said mast (61) and arranged in such a way that, in one and the same movement of the common mast (61), the first arm (62) carries out the transfer of a first core (3) surrounded by its at least one braid wire (4) from the braiding station (7) to the sleeve-coupling station (10) or to a storage station (13) which precedes the sleeve-coupling station (10), while, simultaneously, the second arm (63) carries out the transfer of a second core (3) from the fetching station (5), after detection of the registration element (16) and positioning of the core (3) in azimuth, to the braiding station (7).

14. Method for producing a bead wire (2) intended for the reinforcement of a tyre, such as a pneumatic tyre, said method comprising:
- a step (a) of procurement of a core (3) during which a core (3) is procured which forms a ring having a main axis (Z3), said core being in fact held closed on itself at a join called "core join" (6) which occupies, in azimuth about said main axis (Z3), a first angular sector (S6),
- a braiding step (d) during which at least one wire, called "braid wire" (4), is helically wound about the core (3), over at least one turn about the main axis (Z3),
- a step (e) of production of a braid join (8), during which a join is made, preferably by means of a crimped braid sleeve (9), between a first end section of the braid wire (4A) and a second end section of the braid wire (4B) in order to keep said braid wire closed on itself about said main axis (Z3), said braid join (8) occupying, in azimuth about the main axis (Z3), a second angular sector (S8),
said method being **characterized in that** it comprises:
- a detection step (b) during which a registration element (16), with respect to which the position of the first angular sector (S6) is known, is sought and detected on the core (3),
- a positioning step (c) during which said registration element (16) is taken into consideration to adapt the azimuthal orientation of said core (3), with reference to said registration element (16), upon the implementation of the braiding step (d), so that, at the end of the steps (d) of braiding and then (e) of production of the braid join, the second angular sector (S8) occupied by the braid join (8) does not overlap the first angular sector (S6) occupied by the core join (6).
